# EUROPEAN PATENT SPECIFICATION

(11) **EP 2 938 023 B1**
(45) Date of publication and mention of the grant of the patent: **29.05.2019**
(21) Application number: 12890316.8
(22) Date of filing: 21.12.2012
(51) Int. Cl.: H04L 12/14, H04L 12/46

(54) **PEER-TO-PEER SERVICE PROCESSING METHODS AND NETWORS**
PEER-TO-PEER DIENSTVERARBEITUNGSVERFAHREN UND NETZWERKE
PROCÉDÉS ET RÉSEAUX DE TRAITEMENT DE SERVICE PAIR À PAIR

(43) Date of publication of application: 28.10.2015
(73) Proprietor: Huawei Technologies Co., Ltd., Longgang District Shenzhen, Guangdong 518129 (CN)
(72) Inventor: DUAN, Haifeng, Shenzhen Guangdong 518129 (CN)
(74) Representative: Isarpatent
(86) International application number: PCT/CN2012/087099
(87) International publication number: WO 2014/094285

(56) References cited:
- WO-A1-2006/125454
- CN-A- 101 370 253
- CN-A- 101 420 675
- CN-A- 101 442 415
- US-A1- 2008 195 700
- US-A1- 2009 109 982
- US-A1- 2010 138 226

## Description

### TECHNICAL FIELD

The present invention relates to a field of communications, and particularly, to peer to peer service processing technologies.

### BACKGROUND

In a data service network, if several terminal users initiate a peer to peer service (P2P: Peer To Peer, peer to peer), for example, a user A and a user B both activate a data service through a gateway general packet radio service (General Packet Radio Service, referred to as "GPRS") support node (Gateway GPRS Support Node, referred to as "GGSN") and initiate a peer to peer download service, control processing or charging processing could not be performed on a receiver of this peer to peer service packet currently, and control processing or charging processing may be only performed on an initiator of the packet. For example, A sends a packet to B, then only A is controlled (including access control, bandwidth control, etc.) and charged (including traffic charging, duration charging or pay-per-view, etc.). In short, a solution of an existing NAS device for control processing or charging processing on users of the peer to peer service is not flexible enough.

WO 2006/125454 A1 discloses a method for traffic diversion in an ethernet-based access network, wherein the edge node identifies peer-to-peer traffic and generates address conversion information for access nodes connected to the end users concerned, the access nodes are then able to identify packets forming part of the peer-to-peer connection, modify address information to conceal the address of source end user from destination end user and vice versa and reroute the packets though the access network to the destination end user without passing through the edge node.

US 2008/195700 A1 discloses a method for the flow of peer-to-peer traffic between end users within all access networks without requiring the traffic to pass through a network gateway such as a BRAS. End user devices connect through access nodes to an aggregation network and a gateway. An upstream ARP proxy and a downstream ARP proxy are implemented in each access node.

US 2009/109982 A1 discloses a method including receiving one or more packets of a communication session from one or more interfaces, such that the interface is a subscriber interface or a network interface. The method further includes associating the communication session to an end user with a source IP address of the packet if the packet is received from the subscriber interface or to an end user with a destination IP address of the packet if the packet is received from the network interface.

US 2010/138226 A1 discloses a method which permits P2P services in an IP-based communications network and also permits direct IP-traffic between subscribers in a controlled manner solely for specific P2P applications that are predetermined by the system provider. In addition, a special billing method for subscribers of P2P services is further provided.

### SUMMARY

Embodiments of the present invention provide methods for peer to peer service processing and network side communication networks, which improve the flexibility of performing control processing or charging processing on users of a peer to peer service.

In a first aspect, a method for peer to peer service processing is provided, including: receiving, by a network side communication network, a service packet, and determining that the service packet is a peer to peer service packet according to a fact that addresses of a source end and an opposite end of the service packet are addresses in a terminal address pool; and identifying, by the network side communication network, transmission position information of the peer to peer service packet, and performing control processing or charging processing on one or both of the source end and the opposite end aiming at the peer to peer service packet, according to the transmission position information, wherein the transmission position information includes information of a physical port, a virtual local area network or a tunnel which transmits the peer to peer service packet; wherein the network side communication network includes a network access server NAS device and a bidirectional processing apparatus; the receiving, by the network side communication network, the service packet, and the determining that the service packet is the peer to peer service packet according to the fact that the addresses of the source end and the opposite end of the service packet are the addresses in the terminal address pool, include: receiving, by the NAS device, the service packet, and determining that the service packet is the peer to peer service packet according to the fact that the addresses of the source end and the opposite end of the service packet are the addresses in the terminal address pool; the identifying, by the network side communication network, the transmission position information of the peer to peer service packet, and the performing control processing or charging processing on one or both of the source end and the opposite end aiming at the peer to peer service packet, according to the transmission position information, include: identifying, by the NAS device, that the transmission position information is first position information, determining that the peer to peer service packet is from a terminal side, and forwarding the peer to peer service packet to the bidirectional processing apparatus; receiving, by the bidirectional processing apparatus, the peer to peer service packet forwarded by the NAS device, identifying that the transmission position information is second position information, determining that the peer to peer service packet enters the bidirectional processing apparatus for the first time, performing control processing or charging processing on the source end aiming at the peer to peer service packet, and then forwarding the peer to peer service packet to the NAS device; receiving, by the NAS device, the peer to peer service packet forwarded by the bidirectional processing apparatus, identifying that the transmission position information is third position information, determining that the source end has been performed with control processing or charging processing, and forwarding the peer to peer service packet to the bidirectional processing apparatus again; receiving, by the bidirectional processing apparatus, the peer to peer service packet forwarded by the NAS device, identifying that the transmission position information is fourth position information, determining that the peer to peer service packet enters the bidirectional processing apparatus for the second time, performing control processing or charging processing on the opposite end aiming at the peer to peer service packet, and then forwarding the peer to peer service packet to the NAS device; receiving, by the NAS device, the peer to peer service packet forwarded by the bidirectional processing apparatus, identifying that the transmission position information is fifth position information, determining that the source end and the opposite end have been performed with control processing or charging processing, and sending the peer to peer service packet to the opposite end.

In a second aspect, a method for peer to peer service processing is provided, including: receiving, by a network side communication network, a service packet, and determining that the service packet is a peer to peer service packet according to a fact that addresses of a source end and an opposite end of the service packet are addresses in a terminal address pool; and identifying, by the network side communication network, transmission position information of the peer to peer service packet, and performing control processing or charging processing on one or both of the source end and the opposite end aiming at the peer to peer service packet, according to the transmission position information, wherein the transmission position information includes information of a physical port, a virtual local area network or a tunnel which transmits the peer to peer service packet; wherein the network side communication network includes an NAS device, a network device and a bidirectional processing apparatus; the receiving, by the network side communication network, the service packet, and the determining that the service packet is the peer to peer service packet according to the fact that the addresses of the source end and the opposite end of the service packet are the addresses in the terminal address pool, include: receiving, by the NAS device, the service packet, and determining that the service packet is the peer to peer service packet according to the fact that the addresses of the source end and the opposite end of the service packet are the addresses in the terminal address pool; the identifying, by the network side communication network, the transmission position information of the peer to peer service packet, and the performing control processing or charging processing on one or both of the source end and the opposite end aiming at the peer to peer service packet, according to the transmission position information, include: identifying, by the NAS device, that the transmission position information is first position information, determining that the peer to peer service packet is from a terminal side, and forwarding the peer to peer service packet to the network device; receiving, by the network device, the peer to peer service packet forwarded by the NAS device, identifying that the transmission position information is second position information, determining that the peer to peer service packet is from the NAS device, and forwarding the peer to peer service packet to the bidirectional processing apparatus; receiving, by the bidirectional processing apparatus, the peer to peer service packet forwarded by the network device, identifying that the transmission position information is third position information, determining that the peer to peer service packet enters the bidirectional processing apparatus for the first time, performing control processing or charging processing on the source end aiming at the peer to peer service packet, and then forwarding the peer to peer service packet to the network device; receiving, by the network device, the peer to peer service packet forwarded by the bidirectional processing apparatus, identifying that the transmission position information is fourth position information, determining that the source end has been performed with control processing or charging processing, and forwarding the peer to peer service packet to the bidirectional processing apparatus again; receiving, by the bidirectional processing apparatus, the peer to peer service packet forwarded by the network device, identifying that the transmission position information is fifth position information, determining that the peer to peer service packet enters the bidirectional processing apparatus for the second time, performing control processing or charging processing on the opposite end aiming at the peer to peer service packet, and then forwarding the peer to peer service packet to the network device; receiving, by the network device, the peer to peer service packet forwarded by the bidirectional processing apparatus, identifying that the transmission position information is sixth position information, determining that the source end and the opposite end have been performed with control processing or charging processing, and forwarding the peer to peer service packet to the NAS device; receiving, by the NAS device, the peer to peer service packet forwarded by the network device, identifying that the transmission position information is seventh position information, determining that the peer to peer service packet is from the network device, and sending the peer to peer service packet to the opposite end.

In a third aspect, a network side communication network is provided, including: a network access server NAS device and a bidirectional processing apparatus, wherein the NAS device is in communication connection with the bidirectional processing apparatus; the NAS device is configured to receive a service packet, determine that the service packet is a peer to peer service packet according to a fact that addresses of a source end and an opposite end of the service packet are addresses in a terminal address pool, identify transmission position information of the peer to peer service packet, and forward the peer to peer service packet according to the transmission position information, wherein the transmission position information includes information of a physical port, a virtual local area network or a tunnel which transmits the peer to peer service packet; and the bidirectional processing apparatus is configured to identify the transmission position information, and perform control processing or charging processing on one or both of the source end and the opposite end aiming at the peer to peer service packet, according to the transmission position information; wherein the NAS device is specifically configured to identify that the transmission position information is first position information, determine that the peer to peer service packet is from a terminal side, and forward the peer to peer service packet to the bidirectional processing apparatus, or receive the peer to peer service packet forwarded by the bidirectional processing apparatus, identify that the transmission position information is third position information, determine that the source end has been performed with control processing or charging processing, and forward the peer to peer service packet to the bidirectional processing apparatus again, or receive the peer to peer service packet forwarded by the bidirectional processing apparatus, identify that the transmission position information is fifth position information, determine that the source end and the opposite end have been performed with control processing or charging processing, and send the peer to peer service packet to the opposite end; the bidirectional processing apparatus includes: a receiving module, configured to receive the peer to peer service packet forwarded by the NAS device; an identifying module, configured to identify that the transmission position information is second position information, determine that the peer to peer service packet enters the bidirectional processing apparatus for the first time, and trigger a first sub-processing module of the bidirectional processing apparatus, or identify that the transmission position information is fourth position information, determine that the peer to peer service packet enters the bidirectional processing apparatus for the second time, and trigger a second sub-processing module of the bidirectional processing apparatus; the first sub-processing module, configured to perform control processing or charging processing on the source end aiming at the peer to peer service packet, and then forward the peer to peer service packet to the NAS device; the second sub-processing module, configured to perform control processing or charging processing on the opposite end aiming at the peer to peer service packet, and then forward the peer to peer service packet to the NAS device.

In a fourth aspect, a network side communication network is provided, including: a network access server NAS device, a network device and a bidirectional processing apparatus, wherein the bidirectional processing apparatus is in communication connection with the NAS device through the network device; the NAS device is configured to receive a service packet, determine that the service packet is a peer to peer service packet according to a fact that addresses of a source end and an opposite end of the service packet are addresses in a terminal address pool, identify transmission position information of the peer to peer service packet, and forward the peer to peer service packet according to the transmission position information, wherein the transmission position information includes information of a physical port, a virtual local area network or a tunnel which transmits the peer to peer service packet; the network device is configured to identify the transmission position information and forward the peer to peer service packet according to the transmission position information; and the bidirectional processing apparatus is configured to identify the transmission position information, and perform control processing or charging processing on one or both of the source end and the opposite end aiming at the peer to peer service packet, according to the transmission position information; wherein the NAS device is specifically configured to identify that the transmission position information is first position information, determine that the peer to peer service packet is from a terminal side, and forward the peer to peer service packet to the network device, or receive the peer to peer service packet forwarded by the network device, identify that the transmission position information is seventh position information, determine that the peer to peer service packet is from the network device and send the peer to peer service packet to the opposite end; the network device is specifically configured to receive the peer to peer service packet forwarded by the NAS device, identify that the transmission position information is second position information, determine that the peer to peer service packet is from the NAS device, and forward the peer to peer service packet to the bidirectional processing apparatus, or receive the peer to peer service packet forwarded by the bidirectional processing apparatus, identify that the transmission position information is fourth position information, determine that the source end has been performed with control processing or charging processing, and forward the peer to peer service packet to the bidirectional processing apparatus again, or receive the peer to peer service packet forwarded by the bidirectional processing apparatus, identify that the transmission position information is sixth position information, determine that the source end and the opposite end have been performed with control processing or charging processing, and forward the peer to peer service packet to the NAS device; the bidirectional processing apparatus includes: a receiving module, configured to receive the peer to peer service packet forwarded by the network device; an identifying module, configured to identify that the transmission position information is third position information, determine that the peer to peer service packet enters the bidirectional processing apparatus for the first time, and trigger a first sub-processing module of the bidirectional processing apparatus, or identify that the transmission position information is fifth position information, determine that the peer to peer service packet enters the bidirectional processing apparatus for the second time, and trigger a second sub-processing module of the bidirectional processing apparatus; the first sub-processing module, configured to perform control processing or charging processing on the source end aiming at the peer to peer service packet, and then forward the peer to peer service packet to the network device; the second sub-processing module, configured to perform control processing or charging processing on the opposite end aiming at the peer to peer service packet, and then forward the peer to peer service packet to the network device.

Based on the above-mentioned technical solutions, in the embodiments of the present invention, by identifying the transmission position information of the peer to peer service packet, and performing control processing or charging processing on one or both of the source end and the opposite end aiming at the peer to peer service packet, according to the transmission position information, the flexibility of performing control processing or charging processing on users of a peer to peer service may be improved.

### BRIEF DESCRIPTION OF DRAWINGS

To illustrate technical solutions in the embodiments of the present invention more clearly, a brief introduction on the accompanying drawings which are needed in the embodiments of the present invention is given below. Apparently, the accompanying drawings in the description below are merely some of the embodiments of the present invention, based on which other drawings may be obtained by those of ordinary skill in the art without any creative efforts.
FIG. 1a, FIG. 1b and FIG. 1c are schematic diagrams of system architectures of a data service network according to embodiments of the present invention.
FIG. 2 is a schematic flowchart of a method for peer to peer service processing according to an embodiment of the present invention.
FIG. 3 is another schematic flowchart of a method for peer to peer service processing according to an embodiment of the present invention.
FIG. 4 is an interactive schematic diagram of a method for peer to peer service processing according to an embodiment of the present invention.
FIG. 5A and FIG. 5B are another schematic flowchart of a method for peer to peer service processing according to an embodiment of the present invention.
FIG. 6 is another interactive schematic diagram of a method for peer to peer service processing according to an embodiment of the present invention.
FIG. 7 is a schematic block diagram of a network side communication network according to an embodiment of the present invention.
FIG. 8 is a schematic block diagram of a network side communication network according to another embodiment of the present invention.
FIG. 9 is a schematic block diagram of an NAS device according to an embodiment of the present invention.
FIG. 10 is a schematic block diagram of a bidirectional processing apparatus according to an embodiment of the present invention.

### DESCRIPTION OF EMBODIMENTS

A clear and complete description of technical solutions in the embodiments of the present invention will be given below, in combination with the accompanying drawings in the embodiments of the present invention. Apparently, the embodiments described are merely a part, but not all, of the embodiments of the present invention. All of other embodiments, obtained by those of ordinary skill in the art based on the embodiments of the present invention without any creative efforts, fall into the protection scope of the present invention.

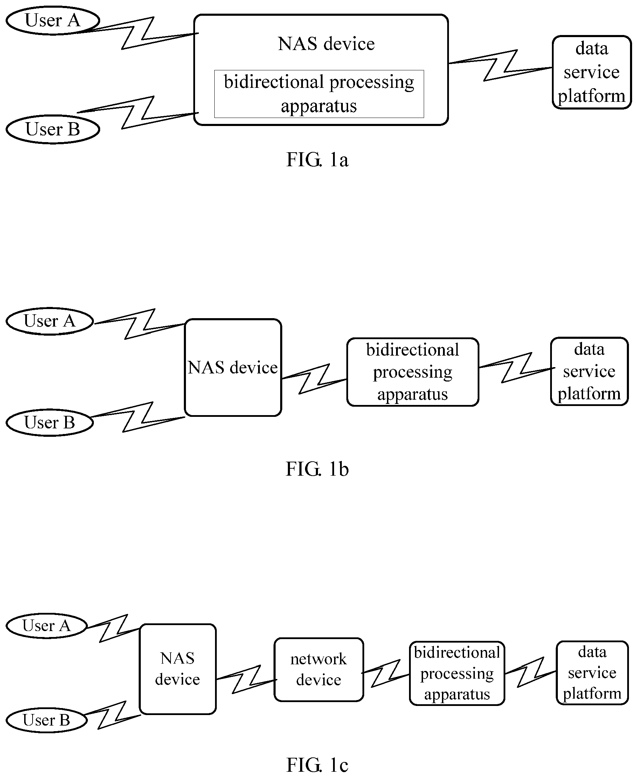

FIG. 1a, FIG. 1b and FIG. 1c are schematic diagrams of system architectures of a data service network in implementations. In the data service network, a user activates a data service and receives the data service by means of a network access server (referred to as NAS device, Network Access Server), for example, a broadband remote access server (Broadband Remote Access Server, referred to as "BRAS"), a gateway GPRS support node (gateway GPRS support node, referred to as "GGSN") and a packet data serving node (Packet Data Serving Node, referred to as "PDSN").

In the embodiments of the present invention, charging processing or control processing on both sides, namely, a source end and an opposite end of a peer to peer service may be performed by providing a new NAS device (including a bidirectional processing apparatus, see FIG. 1a), or deploying a bidirectional processing apparatus (see FIG. 1b and FIG. 1c) in communication connection with the NAS device. In FIG. 1b, the NAS device may be in direct communication connection with the bidirectional processing apparatus; see FIG. 1c, a network device, for example, a switch or a router, may also be deployed between the NAS device and the bidirectional processing apparatus. This is to say, in the embodiments of the present invention, a device forwarding a packet to the bidirectional processing apparatus may be the NAS device and may also be the network device deployed between the NAS device and the bidirectional processing apparatus.

In order to make solutions clear, a system formed by such network side devices as the NAS device, the bidirectional processing apparatus, the network device and a data service platform mentioned above is called as a network side communication network.

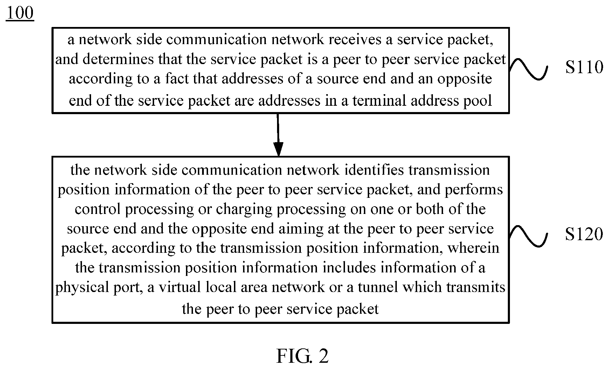

FIG. 2 is a schematic flowchart of a method 100 for peer to peer service processing according to an embodiment of the present invention. As shown in FIG. 2, the method 100 includes:
S110, a network side communication network receives a service packet, and determines that the service packet is a peer to peer service packet according to a fact that addresses of a source end and an opposite end of the service packet are addresses in a terminal address pool;
S120, the network side communication network identifies transmission position information of the peer to peer service packet, and performs control processing or charging processing on one or both of the source end and the opposite end aiming at the peer to peer service packet, according to the transmission position information, wherein the transmission position information includes information of a physical port, a virtual local area network or a tunnel which transmits the peer to peer service packet.

In the embodiments of the present invention, the transmission position information refers to a position of a communication network passed by the service packet in a communication transmission process, and should not constitute any limit to the embodiments of the present invention. In the network side communication network, different identifiers are allocated to positions passed by the service packet in the transmission process, in order to enable a device receiving the service packet in the network to determine the previous hop network device of the service packet by use of these identifiers; further, the device may determine whether to perform control processing or charging processing on one or both of the source end and the opposite end aiming at the peer to peer service packet, according to the previous hop network device of the service packet and in combination with a related control and charging policy.

The above-mentioned transmission position information may be information of a physical port, a virtual local area network (Virtual Local Area Network, referred to as "VLAN"), for example, an identifier of VLAN, VALAN ID, or a tunnel (Tunnel), for example, an identifier of the tunnel, Tunnel ID, which transmits the peer to peer service packet. More specifically, the VLAN information is carried in a data packet, and the physical port information and the tunnel information are identified and distinguished through connected physical links. For convenience of understanding, the physical port refers to a communication network port having a physical significance, for example, an Ethernet interface or an optical fiber interface receiving the service packet; the VLAN refers to a virtual local area network composed of a network device receiving the service packet and a network device sending the service packet, and is generally distinguished according to VLAN ID, in particular, identifiers allocated to an uplink VLAN and a downlink VLAN are different, in this way, transmission directions of the service packet may be distinguished; the Tunnel refers to information of a tunnel receiving the service packet, and is generally distinguished by Tunnel ID in the network device.

Those skilled in the art may understand that, in the above-mentioned control processing or charging processing course, reference information at least includes a control and charging policy aiming at the source end, a control and charging policy aiming at the opposite end, or a policy acquired by comprehensive decision of the above-mentioned two control and charging policies. In various embodiments of the present invention, the control processing includes access control for allowing access or refusing access of services accessed by the user, or bandwidth control or the like; the charging processing includes traffic charging, duration charging or pay-per-view, or combined charging of the three manners on the services accessed by the user. In the embodiment of the present invention, the services accessed by the user may be controlled and charged, or only controlled or only charged, and this is not limited in the present invention.

The technical solutions of the embodiments of the present invention are not only applicable to a scenario that the peer to peer service are performed by two users (one source end to one opposite end), but also are applicable to a scenario that the peer to peer services are initiated among a plurality of users, because the packet interaction among the plurality of users may be converted into a plurality of both sides service interaction scenarios finally.

The method for peer to peer service processing of the embodiment of the present invention, by identifying the transmission position information of the peer to peer service packet, and performing control processing or charging processing on one or both of the source end and the opposite end aiming at the peer to peer service packet, according to the transmission position information, may achieve performing control processing or charging processing on both sides of a peer to peer service.

Specifically, the above-mentioned step 120 may include a variety of different processing: if determining that the peer to peer service packet is from a terminal side (source end) according to the transmission position information and no control processing or charging processing is performed, performing control or charging processing aiming at the source end according to the address of the source end in the service packet and in combination with the control and charging policy of the source end, and determining the next hop of the service packet (the next hop may be different according to different network architectures, may be a bidirectional processing apparatus itself in a NAS device, and may also be that the NAS device sends the service packet to the bidirectional processing apparatus); or,
if determining that the peer to peer service packet is from a network side according to the transmission position information and the control or charging processing aiming at the source end has been performed in combination with the control and charging policy of the source end merely, performing control and charging processing aiming at the opposite end according to the address of the opposite end in the service packet and in combination with the control and charging policy of the opposite end, and determining the next hop of the service packet; or,
if determining that the peer to peer service packet is from the network side according to the transmission position information and corresponding control and charging policies have been performed aiming at the source end and the opposite end, sending the service packet to the opposite end.

The above-mentioned different conditions may be decomposed or merged in various manners due to different network architectures, but the realization of the implementations of the present invention is not influenced on the whole. In short, by using the transmission position information as one of conditions to understand the processing progress, the transmission position or the flow stage of the service packet, the above-mentioned method achieves confirming and processing control and charging on the both sides of the peer to peer service in combination with related control and charging policies; compared with the method in the prior art in which only the address of the source end in the service packet is referred and related control and charging policy is combined, may further flexibly or efficiently realize complicated service control or charging.

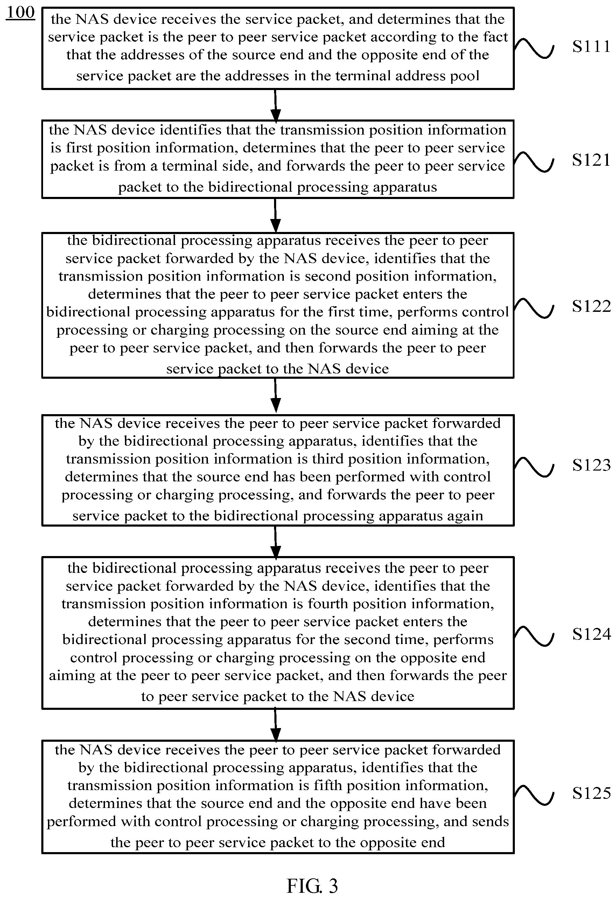

Therefore, optionally, as an embodiment of the present invention, the network side communication network includes a network access server NAS device and a bidirectional processing apparatus, such as the network architecture shown in FIG. 1b;
in this network architecture, as shown in FIG. 3, S110 includes:
Sill, the NAS device receives the service packet, and determines that the service packet is the peer to peer service packet according to the fact that the addresses of the source end and the opposite end of the service packet are the addresses in the terminal address pool;
S120 includes:
   S121, the NAS device identifies that the transmission position information is first position information, determines that the peer to peer service packet is from a terminal side, and forwards the peer to peer service packet to the bidirectional processing apparatus;
   S122, the bidirectional processing apparatus receives the peer to peer service packet forwarded by the NAS device, identifies that the transmission position information is second position information, determines that the peer to peer service packet enters the bidirectional processing apparatus for the first time, performs control processing or charging processing on the source end aiming at the peer to peer service packet, and then forwards the peer to peer service packet to the NAS device;
   S123, the NAS device receives the peer to peer service packet forwarded by the bidirectional processing apparatus, identifies that the transmission position information is third position information, determines that the source end has been performed with control processing or charging processing, and forwards the peer to peer service packet to the bidirectional processing apparatus again;
   S124, the bidirectional processing apparatus receives the peer to peer service packet forwarded by the NAS device, identifies that the transmission position information is fourth position information, determines that the peer to peer service packet enters the bidirectional processing apparatus for the second time, performs control processing or charging processing on the opposite end aiming at the peer to peer service packet, and then forwards the peer to peer service packet to the NAS device;
   S125, the NAS device receives the peer to peer service packet forwarded by the bidirectional processing apparatus, identifies that the transmission position information is fifth position information, determines that the source end and the opposite end have been performed with control processing or charging processing, and sends the peer to peer service packet to the opposite end.

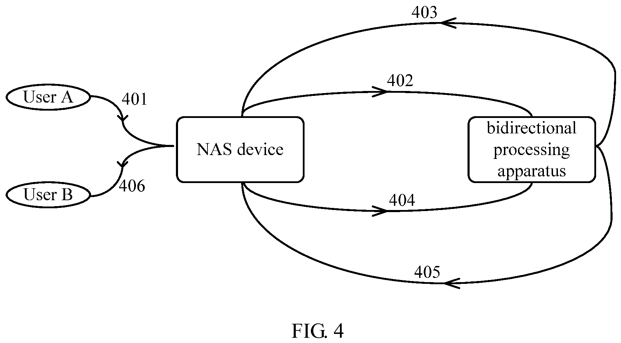

The embodiment of the present invention will be described below in detail in combination with FIG. 4. It should be noted that, this is only intended to help those of skilled in the art to better understand the embodiment of the present invention, rather than limiting the scope of the embodiment of the present invention.

FIG. 4 is a schematic diagram of a method in a communication system as shown in FIG. 1b. In the implementation, a bidirectional processing apparatus is deployed behind an NAS device for performing charging processing or control processing on a peer to peer service.

In the implementation, it is taken as an example that a user A initiates a peer to peer service call to a user B through the NAS device.

401, the NAS device receives (for example, receiving from a physical port 1, or VLAN1, or Tunnel 1) an internet protocol (Internet Protocol, referred to as "IP") data packet sent by A to B, and determines that the packet is a peer to peer service packet according to a fact that addresses of a source end and an opposite end of the packet are addresses in a terminal address pool.

402, the NAS device identifies that transmission position information is first position information (for example, identifying that the physical port receiving the packet is the physical port 1, or VALN ID carried in the packet is VLAN 1, or Tunnel receiving the packet is Tunnel 1), determines that the peer to peer service packet is from a terminal side, and forwards the peer to peer service packet to the bidirectional processing apparatus (for example, routing to the bidirectional processing apparatus through a physical port 2 or VLAN 2 or Tunnel 2).

403, the bidirectional processing apparatus receives (for example, receiving from a physical port 22 corresponding to the physical port 2, or VLAN 2, or Tunnel 2) the peer to peer service packet forwarded by the NAS device, identifies that the transmission position information is second position information, (for example, identifying that the physical port receiving the packet is the physical port 22, or VALN ID carried in the packet is VLAN 2, or Tunnel receiving the packet is Tunnel 2), determines that the peer to peer service packet enters the bidirectional processing apparatus for the first time, performs control processing or charging processing on the source end aiming at the peer to peer service packet, namely, extracts a source IP address in the packet to serve as a user identifier to perform corresponding control processing or charging processing (in this example, control processing or charging processing is performed on A), and then forwards the peer to peer service packet to the NAS device (for example, forwarding to the NAS device through a physical port 3 or VLAN 3 or Tunnel 3).

404, the NAS device receives (for example, receiving from a physical port 33 corresponding to the physical port 3, or VLAN 3, or Tunnel 3) the peer to peer service packet forwarded by the bidirectional processing apparatus, identifies that the transmission position information is third position information (for example, identifying that the physical port receiving the packet is the physical port 33, or VLAN ID carried in the packet is VLAN 3, or Tunnel receiving the packet is Tunnel 3), determines that the packet is from the bidirectional processing apparatus, the source end has been performed with control processing or charging processing and the peer to peer service packet needs to be forwarded to the bidirectional processing apparatus again, and forwards the peer to peer service packet to the bidirectional processing apparatus again (for example, forwarding to the bidirectional processing apparatus through a physical port 4, or VLAN 4 or Tunnel 4).

405, the bidirectional processing apparatus receives (for example, receiving from a physical port 44 corresponding to the physical port 4, or VLAN 4, or Tunnel 4) the peer to peer service packet forwarded by the NAS device, identifies that the transmission position information is fourth position information (for example, identifying that the physical port receiving the packet is the physical port 44, or VLAN ID carried in the packet is VILAN 4, or Tunnel receiving the packet is Tunnel 4), determines that the peer to peer service packet enters the bidirectional processing apparatus for the second time, performs control processing or charging processing on the opposite end aiming at the peer to peer service packet, namely, extracts a target IP address of the packet to serve as a user identifier to perform corresponding control processing or charging processing (in this example, control processing or charging processing is performed on B), and then forwards the peer to peer service packet to the NAS device (for example, forwarding to the NAS device through a physical port 5, or VLAN 5 or Tunnel 5).

406, the NAS device receives (for example, receiving from a physical port 55 corresponding to the physical port 5, or VLAN 5, or Tunnel 5) the peer to peer service packet forwarded by the bidirectional processing apparatus, identifies that the transmission position information is fifth position information (for example, identifying that the physical port receiving the packet is the physical port 55, or VLAN ID carried in the packet is VLAN 5, or Tunnel receiving the packet is Tunnel 5), determines that the packet is from the bidirectional processing apparatus and the source end and the opposite end have been performed with control processing or charging processing, and sends the peer to peer service packet to the opposite end, namely, the user B.

Optionally, if the NAS device determines that the packet is from the network side, namely, the packet is forwarded by another NAS device, the packet is not forwarded to the bidirectional processing apparatus and is directly sent to the opposite end (because control processing or charging processing has been performed on the side of the another NAS device).

Therefore, according to the method for peer to peer service processing of the embodiment of the present invention, the bidirectional processing apparatus is deployed to perform control processing or charging processing on the peer to peer service, the NAS device forwards the peer to peer service packet to the bidirectional processing apparatus twice, and the bidirectional processing apparatus, according to the transmission position information, performs control processing or charging processing on the source end when receiving the packet for the first time and performs control processing or charging processing on the opposite end when receiving the packet for the second time, so that the control processing or charging processing may be performed on the both sides of the peer to peer service on a condition of not performing large reformation or large upgrade on the NAS device.

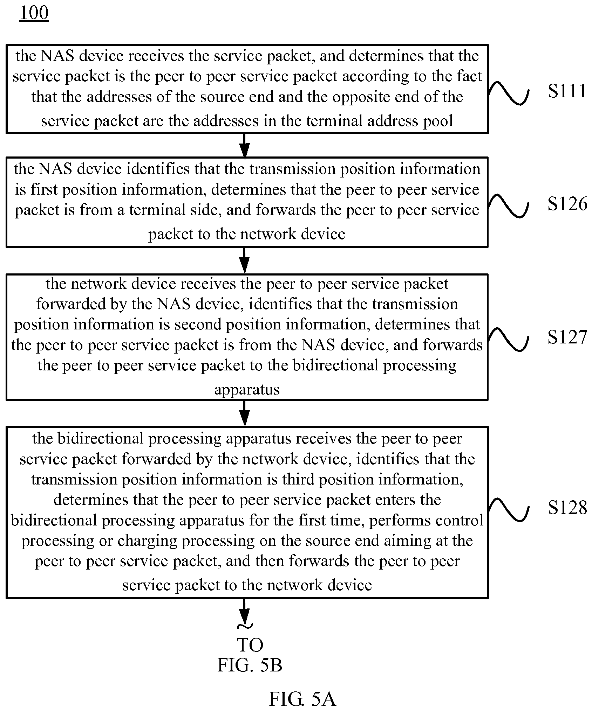

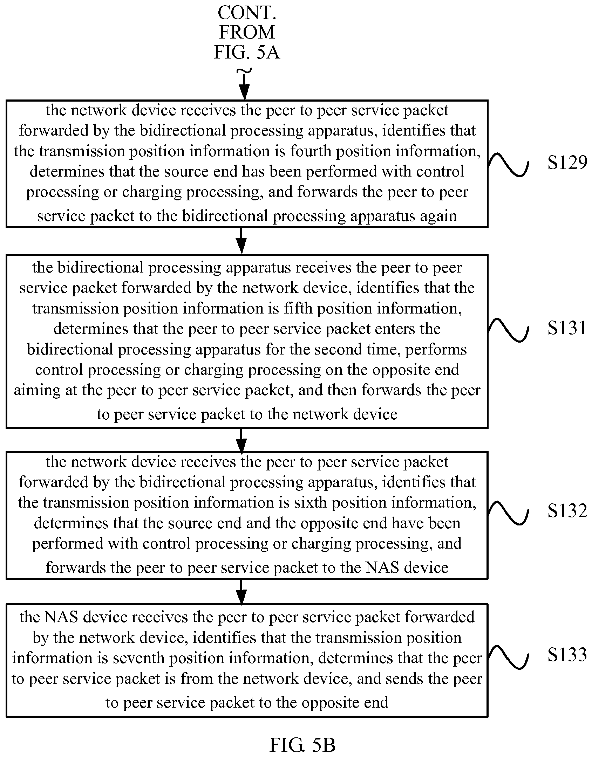

Optionally, as another embodiment of the present invention, the network side communication network includes an NAS device, a network device and a bidirectional processing apparatus, such as the network architecture shown in FIG. 1c;
in this network architecture, as shown in FIG. 5A and FIG. 5B, S110 includes:
Sill, the NAS device receives the service packet, and determines that the service packet is the peer to peer service packet according to the fact that the addresses of the source end and the opposite end of the service packet are the addresses in the terminal address pool;
S120 includes:
   S126, the NAS device identifies that the transmission position information is first position information, determines that the peer to peer service packet is from a terminal side, and forwards the peer to peer service packet to the network device;
   S127, the network device receives the peer to peer service packet forwarded by the NAS device, identifies that the transmission position information is second position information, determines that the peer to peer service packet is from the NAS device, and forwards the peer to peer service packet to the bidirectional processing apparatus;
   S128, the bidirectional processing apparatus receives the peer to peer service packet forwarded by the network device, identifies that the transmission position information is third position information, determines that the peer to peer service packet enters the bidirectional processing apparatus for the first time, performs control processing or charging processing on the source end aiming at the peer to peer service packet, and then forwards the peer to peer service packet to the network device;
   S129, the network device receives the peer to peer service packet forwarded by the bidirectional processing apparatus, identifies that the transmission position information is fourth position information, determines that the source end has been performed with control processing or charging processing, and forwards the peer to peer service packet to the bidirectional processing apparatus again;
   S131, the bidirectional processing apparatus receives the peer to peer service packet forwarded by the network device, identifies that the transmission position information is fifth position information, determines that the peer to peer service packet enters the bidirectional processing apparatus for the second time, performs control processing or charging processing on the opposite end aiming at the peer to peer service packet, and then forwards the peer to peer service packet to the network device;
   S132, the network device receives the peer to peer service packet forwarded by the bidirectional processing apparatus, identifies that the transmission position information is sixth position information, determines that the source end and the opposite end have been performed with control processing or charging processing, and forwards the peer to peer service packet to the NAS device;
   S133, the NAS device receives the peer to peer service packet forwarded by the network device, identifies that the transmission position information is seventh position information, determines that the peer to peer service packet is from the network device, and sends the peer to peer service packet to the opposite end.

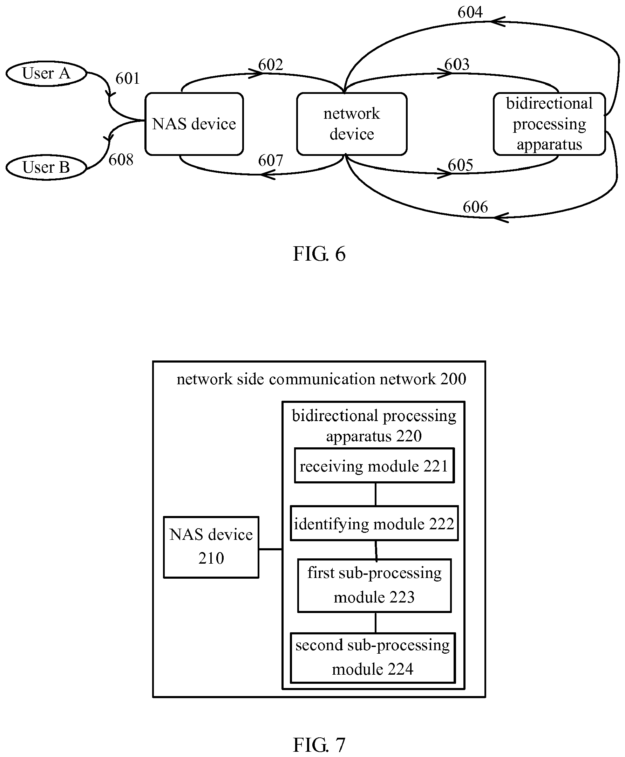

The embodiment of the present invention will be described below in detail in combination with FIG. 6. It should be noted that, this is only intended to help those of skilled in the art to better understand the embodiment of the present invention, rather than limiting the scope of the embodiment of the present invention.

FIG. 6 is a schematic diagram of a method in a communication system as shown in FIG. 1c. In the implementation, a bidirectional processing apparatus is deployed behind an NAS device for performing charging processing or control processing on a peer to peer service, and a network device is deployed between the NAS device and the bidirectional processing apparatus.

In the implementation, it is taken as an example that a user A initiates a peer to peer service call to a user B through the NAS device.

601, the NAS device receives (for example, receiving from a physical port 1, or VLAN1, or Tunnel 1) an IP data packet sent by A to B, and determines that the packet is a peer to peer service packet according to a fact that addresses of a source end and an opposite end of the packet are addresses in a terminal address pool.

602, the NAS device identifies that transmission position information is first position information (for example, identifying that the physical port receiving the service packet is the physical port 1, or VALN ID carried in the packet is VLAN 1, or Tunnel receiving the packet is Tunnel 1), determines that the peer to peer service packet is from a terminal side, and forwards the peer to peer service packet to the network device (for example, routing to the network device through a physical port 2 or VLAN 2 or Tunnel 2).

603, the network device receives (for example, receiving from a physical port 22 corresponding to the physical port 2, or VLAN 2, or Tunnel 2) the peer to peer service packet forwarded by the NAS device, identifies that the transmission position information is second position information, (for example, identifying that the physical port receiving the packet is the physical port 22, or VALN ID carried in the packet is VLAN 2, or Tunnel receiving the packet is Tunnel 2), determines that the peer to peer service packet is from the NAS device, and forwards the peer to peer service packet to the bidirectional processing apparatus (for example, forwarding to the bidirectional processing apparatus through a physical port 3, or VLAN 3 or Tunnel 3). Optionally, a user side IP address pool or an IP address range may be configured on the network device, and the network device judges that the packet is the peer to peer service packet according to the fact that the IPs of the source end and the opposite end are user side IP addresses.

604, the bidirectional processing apparatus receives (for example, receiving from a physical port 33 corresponding to the physical port 3, or VLAN 3, or Tunnel 3) the peer to peer service packet forwarded by the network device, identifies that the transmission position information is third position information (for example, identifying that the physical port receiving the packet is the physical port 33, or VLAN ID carried in the packet is VLAN 3, or Tunnel receiving the packet is Tunnel 3), determines that the peer to peer service packet enters the bidirectional processing apparatus for the first time, performs control processing or charging processing on the source end aiming at the peer to peer service packet, namely, extracts a source IP address in the packet to serve as a user identifier to perform corresponding control processing or charging processing (in this example, control processing or charging processing is performed on A), and then forwards the peer to peer service packet to the network device (for example, forwarding to the network device through a physical port 4 or VLAN 4 or Tunnel 4).

605, the network device receives (for example, receiving from a physical port 44 corresponding to the physical port 4, or VLAN 4, or Tunnel 4) the peer to peer service packet forwarded by the bidirectional processing apparatus, identifies that the transmission position information is fourth position information (for example, identifying that the physical port receiving the packet is the physical port 44, or VALN ID carried in the packet is VLAN 4, or Tunnel receiving the packet is Tunnel 4), determines that the packet is from the bidirectional processing apparatus, the source end has been performed with control processing or charging processing and the peer to peer service packet needs to be forwarded to the bidirectional processing apparatus again, and forwards the peer to peer service packet to the bidirectional processing apparatus again (for example, forwarding to the bidirectional processing apparatus through a physical port 5 or VLAN 5 or Tunnel 5).

606, the bidirectional processing apparatus receives (for example, receiving from a physical port 55 corresponding to the physical port 5, or VLAN 5, or Tunnel 5) the peer to peer service packet forwarded by the network device, identifies that the transmission position information is fifth position information (for example, identifying that the physical port receiving the packet is the physical port 55, or VALN ID carried in the packet is VLAN 5, or Tunnel receiving the packet is Tunnel 5), determines that the peer to peer service packet enters the bidirectional processing apparatus for the second time, performs control processing or charging processing on the opposite end aiming at the peer to peer service packet, namely, extracts a target IP address of the packet to serve as a user identifier to perform corresponding control processing or charging processing (in this example, control processing or charging processing is performed on B), and then forwards the peer to peer service packet to the network device (for example, forwarding to the network device through a physical port 6, or VLAN 6 or Tunnel 6).

607, the network device receives (for example, receiving from a physical port 66 corresponding to the physical port 6, or VLAN 6, or Tunnel 6) the peer to peer service packet forwarded by the bidirectional processing apparatus, identifies that the transmission position information is sixth position information (for example, identifying that the physical port receiving the packet is the physical port 66, or VALN ID carried in the packet is VLAN 6, or Tunnel receiving the packet is Tunnel 6), determines that the packet is from the bidirectional processing apparatus and the source end and the opposite end have been performed with control processing or charging processing, and forwards the peer to peer service packet to the NAS device (for example, forwarding to the NAS device through a physical port 7, or VLAN 7 or Tunnel 7).

608, the NAS device receives (for example, receiving from a physical port 77 corresponding to the physical port 7, or VLAN 7, or Tunnel 7) the peer to peer service packet forwarded by the network device, identifies that the transmission position information is seventh position information (for example, identifying that the physical port receiving the packet is the physical port 77, or VALN ID carried in the packet is VLAN 7, or Tunnel receiving the packet is Tunnel 7), determines that the peer to peer service packet is from the network device, and sends the peer to peer service packet to the opposite end, namely, the user B.

Optionally, if the NAS device determines that the packet is from the network side, the packet is not forwarded to the network device (because control processing or charging processing has been performed on the side of another NAS device).

Therefore, according to the method for peer to peer service processing of the embodiment of the present invention, the bidirectional processing apparatus is deployed to perform control processing or charging processing on the peer to peer service, the network device is deployed between the NAS device and the bidirectional processing apparatus to forward the peer to peer service packet to the bidirectional processing apparatus twice, and the bidirectional processing apparatus, according to the transmission position information, performs control processing or charging processing on the source end when receiving the packet for the first time and performs control processing or charging processing on the opposite end when receiving the packet for the second time, so that the control processing or charging processing may be performed on the both sides of the peer to peer service on a condition of not performing large reformation or large upgrade on the NAS device, and moreover, the configuration pressure of the NAS device may be alleviated.

It should be understood that, in the embodiment of the present invention, the bidirectional processing apparatus may be deployed singly and may also be cooperatively arranged with a gateway device, in other words, the bidirectional processing apparatus may be a single device and may also be the gateway device.

Optionally, as another embodiment of the present invention, the network side communication network includes an NAS device, such as the network architecture shown in FIG. 1 a;
in this network architecture, SI20 includes:
the NAS device determines that the peer to peer service packet is from a terminal side according to the transmission position information, and performs control processing or charging processing on the source end aiming at the peer to peer service packet.

Optionally, SI20 further includes:
when determining that the address of the opposite end is an address managed by the NAS device, the NAS device performs control processing or charging processing on the opposite end aiming at the peer to peer service packet, and then forwards the peer to peer service packet to the opposite end, or when determining that the address of the opposite end is an address managed by another NAS device, forwards the peer to peer service packet to the another NAS device.

Specifically, in the embodiment of the present invention, in order to perform control processing or charging processing on both sides of the peer to peer service, the existing NAS device is reformed. The NAS device receives the service packet, determines that the service packet is the peer to peer service packet according to the fact that the addresses of the source end and the opposite end of the service packet are the addresses in the terminal address pool, identifies the transmission position information of the peer to peer service packet, determines whether the packet is from the terminal side according to the transmission position information, if the packet is from the terminal side, performs control processing or charging processing on the source end, namely, extracts the source IP address of the packet to serve as the user identifier to perform the control processing or charging processing, and judges whether the address of the opposite end is the address managed by the NAS device, if the address of the opposite end is the address managed by the NAS device, performs the control processing or charging processing on the opposite end, namely, extracts the target IP address of the packet to serve as the user identifier to perform the control processing or charging processing, and then forwards the packet to the opposite end, or if the address of the opposite end is the address managed by another NAS device, forwards the packet to the another NAS device.

Optionally, S120 includes:
the NAS device determines that the peer to peer service packet is from a network side according to the transmission position information, performs control processing or charging processing on the opposite end aiming at the peer to peer service packet, and then forwards the peer to peer service packet to the opposite end.

Specifically, if the packet is from the network side, namely, the packet is forwarded by another NAS devices, because the source end has been performed with control processing or charging processing on the side of the another NAS devices, control processing or charging processing is only performed on the opposite end of the packet, namely, the target IP address of the packet is extracted to serve as the user identifier to perform the control processing or charging processing, and then the packet is forwarded to the opposite end.

Therefore, the method for peer to peer service processing of the embodiment of the present invention, by respectively performing control processing or charging processing on the source end and the opposite end by the NAS device, may achieve performing control processing or charging processing on the both sides of the peer to peer service.

It should be understood that, in various embodiments of the present invention, the size of the serial numbers of the above-mentioned processes does not mean the execution order, the execution order of the processes should be determined by the functions and internal logics thereof, and should not constitute any limit to the implementation processes of the embodiments of the present invention.

The method for peer to peer service processing according to the embodiment of the present invention has been described above in detail in combination with FIG. 1 to FIG. 6, the network side communication network, the NAS device and the bidirectional processing apparatus for a peer to peer service according to the embodiment of the present invention will be described below in combination with FIG. 7 to FIG. 10.

FIG. 7 shows a schematic block diagram of a network side communication network 200 according to an embodiment of the present invention. As shown in FIG. 7, the network side communication network 200 includes a NAS device 210 and a bidirectional processing apparatus 220, wherein the NAS device 210 is in communication connection with the bidirectional processing apparatus 220;

the NAS device 210 is configured to receive a service packet, determine that the service packet is a peer to peer service packet according to a fact that addresses of a source end and an opposite end of the service packet are addresses in a terminal address pool, identify transmission position information of the peer to peer service packet, and forward the peer to peer service packet according to the transmission position information, wherein the transmission position information includes information of a physical port, a virtual local area network or a tunnel which transmits the peer to peer service packet; and

the bidirectional processing apparatus 220 is configured to identify the transmission position information, and perform control processing or charging processing on one or both of the source end and the opposite end aiming at the peer to peer service packet, according to the transmission position information.

The network side communication network of the embodiment of the present invention, by identifying the transmission position information of the peer to peer service packet, and performing control processing or charging processing on one or both of the source end and the opposite end aiming at the peer to peer service packet, according to the transmission position information, may flexibly or efficiently achieve performing control processing or charging processing on users of a peer to peer service.

Optionally, the NAS device 210 is specifically configured to identify that the transmission position information is first position information, determine that the peer to peer service packet is from a terminal side, and forward the peer to peer service packet to the bidirectional processing apparatus, or receive the peer to peer service packet forwarded by the bidirectional processing apparatus, identify that the transmission position information is third position information, determine that the source end has been performed with control processing or charging processing, and forward the peer to peer service packet to the bidirectional processing apparatus again, or receive the peer to peer service packet forwarded by the bidirectional processing apparatus, identify that the transmission position information is fifth position information, determine that the source end and the opposite end have been performed with control processing or charging processing, and send the peer to peer service packet to the opposite end;

the bidirectional processing apparatus 220 includes:
a receiving module 221, configured to receive the peer to peer service packet forwarded by the NAS device;
an identifying module 222, configured to identify that the transmission position information is second position information, determine that the peer to peer service packet enters the bidirectional processing apparatus for the first time, and trigger a first sub-processing module 223 of the bidirectional processing apparatus, or identify that the transmission position information is fourth position information, determine that the peer to peer service packet enters the bidirectional processing apparatus for the second time, and trigger a second sub-processing module 224 of the bidirectional processing apparatus;
the first sub-processing module 223, configured to perform control processing or charging processing on the source end aiming at the peer to peer service packet, and then forward the peer to peer service packet to the NAS device;
the second sub-processing module 224, configured to perform control processing or charging processing on the opposite end aiming at the peer to peer service packet, and then forward the peer to peer service packet to the NAS device.

The network side communication network 200 according to the embodiment of the present invention may correspond to the system as shown in FIG. 1b, and the above-mentioned and other operations and/or functions of the modules in the network side communication network 200 are respectively used for achieving corresponding flows of the methods in FIG. 2 to FIG. 4, and for concision, will not be repeated redundantly herein.

According to the network side communication network of the embodiment of the present invention, the bidirectional processing apparatus is deployed to perform control processing or charging processing on the peer to peer service, the NAS device forwards the peer to peer service packet to the bidirectional processing apparatus twice, and the bidirectional processing apparatus, according to the transmission position information, performs control processing or charging processing on the source end when receiving the packet for the first time and performs control processing or charging processing on the opposite end when receiving the packet for the second time, so that the control processing or charging processing may be performed on the both sides of the peer to peer service on a condition of not performing large reformation or large upgrade on the NAS device.

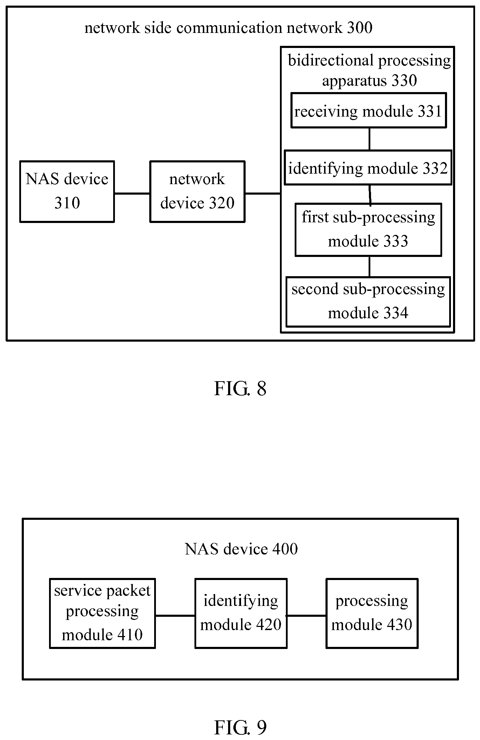

FIG. 8 shows a schematic block diagram of a network side communication network 300 according to an embodiment of the present invention. As shown in FIG. 8, the network side communication network 300 includes an NAS device 310, a network device 320 and a bidirectional processing apparatus 330, wherein the bidirectional processing apparatus 330 is in communication connection with the NAS device 310 through the network device 320;
the NAS device 310 is configured to receive a service packet, determine that the service packet is a peer to peer service packet according to a fact that addresses of a source end and an opposite end of the service packet are addresses in a terminal address pool, identify transmission position information of the peer to peer service packet, and forward the peer to peer service packet according to the transmission position information, wherein the transmission position information includes information of a physical port, a virtual local area network or a tunnel which transmits the peer to peer service packet;
the network device 320 is configured to identify the transmission position information and forward the peer to peer service packet according to the transmission position information; and
the bidirectional processing apparatus 330 is configured to identify the transmission position information, and perform control processing or charging processing on one or both of the source end and the opposite end aiming at the peer to peer service packet according to the transmission position information.

The network side communication network of the embodiment of the present invention, by identifying the transmission position information of the peer to peer service packet, and performing control processing or charging processing on one or both of the source end and the opposite end aiming at the peer to peer service packet, according to the transmission position information, may more flexibly or efficiently achieve performing control processing or charging processing on users of a peer to peer service.

Optionally, the NAS device 310 is specifically configured to identify that the transmission position information is first position information, determine that the peer to peer service packet is from a terminal side, and forward the peer to peer service packet to the network device, or receive the peer to peer service packet forwarded by the network device, identify that the transmission position information is seventh position information, determine that the peer to peer service packet is from the network device and send the peer to peer service packet to the opposite end;
the network device 320 is specifically configured to receive the peer to peer service packet forwarded by the NAS device, identify that the transmission position information is second position information, determine that the peer to peer service packet is from the NAS device, and forward the peer to peer service packet to the bidirectional processing apparatus, or receive the peer to peer service packet forwarded by the bidirectional processing apparatus, identify that the transmission position information is fourth position information, determine that the source end has been performed with control processing or charging processing, and forward the peer to peer service packet to the bidirectional processing apparatus again, or receive the peer to peer service packet forwarded by the bidirectional processing apparatus, identify that the transmission position information is sixth position information, determine that the source end and the opposite end have been performed with control processing or charging processing, and forward the peer to peer service packet to the NAS device;
the bidirectional processing apparatus 330 includes:
a receiving module 331, configured to receive the peer to peer service packet forwarded by the network device;
an identifying module 332, configured to identify that the transmission position information is third position information, determine that the peer to peer service packet enters the bidirectional processing apparatus for the first time, and trigger a first sub-processing module 333 of the bidirectional processing apparatus, or identify that the transmission position information is fifth position information, determine that the peer to peer service packet enters the bidirectional processing apparatus for the second time, and trigger a second sub-processing module 334 of the bidirectional processing apparatus;
the first sub-processing module 333, configured to perform control processing or charging processing on the source end aiming at the peer to peer service packet, and then forward the peer to peer service packet to the network device;
the second sub-processing module 334, configured to perform control processing or charging processing on the opposite end aiming at the peer to peer service packet, and then forward the peer to peer service packet to the network device.

The network side communication network 300 according to the embodiment of the present invention may correspond to the system as shown in FIG. 1c, and the above-mentioned and other operations and/or functions of the modules in the network side communication network 300 are respectively used for achieving corresponding flows of the methods in FIG. 2, FIG. 5 and FIG. 6, and for concision, will not be repeated redundantly herein.

According to the network side communication network of the embodiment of the present invention, the bidirectional processing apparatus is deployed to perform control processing or charging processing on the peer to peer service, the network device is deployed between the NAS device and the bidirectional processing apparatus to forward the peer to peer service packet to the bidirectional processing apparatus twice, and the bidirectional processing apparatus, according to the transmission position information, performs control processing or charging processing on the source end when receiving the packet for the first time and performs control processing or charging processing on the opposite end when receiving the packet for the second time, so that the control processing or charging processing may be performed on both sides of the peer to peer service on a condition of not performing large reformation or large upgrade on the NAS device, and moreover, the configuration pressure of the NAS device may be alleviated.

FIG. 9 is a schematic block diagram of an NAS device 400 according to an embodiment of the present invention. As shown in FIG. 9, the NAS device 400 includes:
a service packet processing module 410, configured to receive a service packet, and determine that the service packet is a peer to peer service packet according to a fact that addresses of a source end and an opposite end of the service packet are addresses in a terminal address pool;
an identifying module 420, configured to identify transmission position information of the peer to peer service packet, wherein the transmission position information includes information of a physical port, a virtual local area network or a tunnel which transmits the peer to peer service packet; and
a processing module 430, configured to perform control processing or charging processing on one or both of the source end and the opposite end aiming at the peer to peer service packet, according to the transmission position information identified by the identifying module 420.

Optionally, the processing module 430 is specifically configured to determine that the peer to peer service packet is from a terminal side according to the transmission position information, and perform control processing or charging processing on the source end aiming at the peer to peer service packet.

Optionally, the processing module 430 is specifically configured to, when determining that the address of the opposite end is an address managed by the NAS device, perform control processing or charging processing on the opposite end aiming at the peer to peer service packet, and then forward the peer to peer service packet to the opposite end, or when determining that the address of the opposite end is an address managed by another NAS device, forward the peer to peer service packet to the another NAS device.

Optionally, the processing module 430 is specifically configured to determine that the peer to peer service packet is from a network side according to the transmission position information, perform control processing or charging processing on the opposite end aiming at the peer to peer service packet, and then forward the peer to peer service packet to the opposite end.

The NAS device of the embodiment of the present invention, by respectively performing control processing or charging processing on the source end and the opposite end, may achieve performing control processing or charging processing on both sides of a peer to peer service.

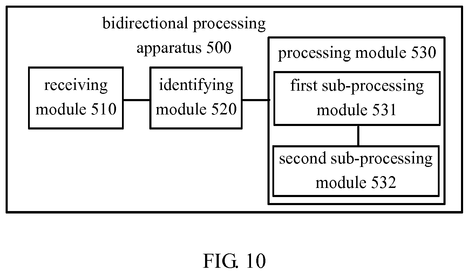

FIG. 10 is a schematic block diagram of a bidirectional processing apparatus 500 for a peer to peer service according to an embodiment of the present invention. As shown in FIG. 10, the bidirectional processing apparatus 500 includes:
a receiving module 510, configured to receive a peer to peer service packet forwarded by a network side device;
an identifying module 520, configured to identify transmission position information of the peer to peer service packet according to the peer to peer service packet received by the receiving module 510, wherein the transmission position information includes information of a physical port, a virtual local area network or a tunnel which transmits the peer to peer service packet; and
a processing module 530, configured to perform control processing or charging processing on one or both of a source end and an opposite end aiming at the peer to peer service packet, according to the transmission position information identified by the identifying module 520, and then forward the peer to peer service packet to the network side device.

Optionally, the identifying module 520 is specifically configured to identify the transmission position information according to the peer to peer service packet received by the receiving module 510, determine that the peer to peer service packet enters the bidirectional processing apparatus for the first time, and trigger a first sub-processing module 531 in the processing module 530, or identify the transmission position information according to the peer to peer service packet received by the receiving module 510, determine that the peer to peer service packet enters the bidirectional processing apparatus for the second time, and trigger a second sub-processing module 532 in the processing module 530;
the processing module 530 specifically includes:
the first sub-processing module 531, configured to perform control processing or charging processing on the source end aiming at the peer to peer service packet, and then forward the peer to peer service packet to the network side device;
the second sub-processing module 532, configured to perform control processing or charging processing on the opposite end aiming at the peer to peer service packet, and then forward the peer to peer service packet to the network side device.

Optionally, the bidirectional processing apparatus 500 is located in a network access server NAS device and is in communication connection with a service packet processing module in the NAS device, and the network side device is the service packet processing module in the NAS device.

Optionally, the bidirectional processing apparatus 500 is in communication connection with a NAS device, and the network side device is the NAS device.

Optionally, the bidirectional processing apparatus 500 is in communication connection with a NAS device through a network device, and the network side device is the network device.

The bidirectional processing apparatus for a peer to peer service of the embodiment of the present invention, by identifying the transmission position information of the peer to peer service packet, and performing control processing or charging processing on one or both of the source end and the opposite end aiming at the peer to peer service packet, according to the transmission position information, may achieve performing control processing or charging processing on both sides of a peer to peer service.

It should be understood that in the embodiments of the present invention, the term "and/or" merely describes an association relationship of associated objects and expresses that three relationships may exist. For example, A and/or B may express the following three conditions: A singly exists, A and B simultaneously exist and B singly exists. In addition, in this paper, the character "/" generally expresses an "or" relationship of front and back associated objects.

Those of ordinary skill in the art may be aware that, units and algorithm steps of the examples described in the embodiments disclosed in this paper may be implemented by electronic hardware, computer software, or a combination of the two, in order to clearly illustrate the interchangeability of hardware and software, the composition and the steps of the examples have been described generally in the above-mentioned illustration according to functions. Whether these functions are implemented in the form of hardware or software depends on specific applications and design constraint conditions of the technical solutions. Those skilled may implement the described functions by using different methods for each specific application, but this implementation should not be considered beyond the scope of the present invention.

Those skilled in the art to which the present invention pertains may clearly understand that, for convenience and concision of description, the specific working processes of the system, apparatus and units described above may refer to corresponding processes in the foregoing method embodiments, and will not be repeated redundantly herein.

In the several embodiments provided in the present application, it should be understood that, the disclosed system, apparatus and method may be implemented in other manners. For example, the apparatus embodiments described above are merely exemplary, e.g., the division of the units is only a logic function division, other division manners may exist in practical implementation, for example, a plurality of units or components may be combined or integrated to another system, or some features may be omitted or not implemented. In addition, the displayed or discussed mutual coupling or direct coupling or communication connection may be indirect coupling or communication connection of devices or units through some interfaces, and may be in electrical, mechanical or other forms.

The units described as separate components may be separated physically or not, components displayed as units may be physical units or not, namely, may be located in one place, or may be distributed on a plurality of network units. Apart of or all of the units may be selected to achieve the purposes of the technical solutions in the embodiments of the present invention according to actual demands.

In addition, the functional units in the embodiments of the present invention may be integrated in a processing unit, or the units singly exist physically, or two or more units are integrated in one unit. The above-mentioned integrated unit may be implemented in the form of hardware and also be implemented in the form a software functional unit.

If the integrated unit is implemented in the form of the software functional unit and is sold or used as an independent product, it may be stored in a computer readable storage medium. Based on this understanding, the technical solutions of the present invention substantially, or the part contributing to the prior art, or all or a part of the technical solutions may be implemented in the form of a software product, the computer software product is stored in a storage medium, and includes a plurality of instructions enabling computer equipment (may be a personal computer, a server, or a network device, etc.) to execute all or a part of the steps of the methods in the embodiments of the present invention. The foregoing storage medium includes a variety of media capable of storing program codes, such as a USB disk, a mobile hard disk, a read-only memory (ROM, Read-Only Memory), a random access memory (RAM, Random Access Memory), a magnetic disk, an optical disk or the like.

The foregoing descriptions are merely specific implementations of the present invention, rather than limiting the protection scope of the present invention. Any skilled one who is familiar with this art could readily think of various equivalent modifications or substitutions within the disclosed technical scope of the present invention, which is defined by the appended claims.

## Claims

1. A method for peer to peer service processing, comprising:
receiving (S110), by a network side communication network, a service packet, and determining that the service packet is a peer to peer service packet according to a fact that addresses of a source end and an opposite end of the service packet are addresses in a terminal address pool; and
identifying (S120), by the network side communication network, transmission position information of the peer to peer service packet, and performing control processing or charging processing on one or both of the source end and the opposite end aiming at the peer to peer service packet, according to the transmission position information, wherein the transmission position information comprises information of a physical port, a virtual local area network or a tunnel which transmits the peer to peer service packet;
wherein the network side communication network comprises a network access server NAS device and a bidirectional processing apparatus;
the receiving (S110), by the network side communication network, the service packet, and the determining that the service packet is the peer to peer service packet according to the fact that the addresses of the source end and the opposite end of the service packet are the addresses in the terminal address pool, comprise:
receiving (S111), by the NAS device, the service packet, and determining that the service packet is the peer to peer service packet according to the fact that the addresses of the source end and the opposite end of the service packet are the addresses in the terminal address pool;
the identifying (S120), by the network side communication network, the transmission position information of the peer to peer service packet, and the performing control processing or charging processing on one or both of the source end and the opposite end aiming at the peer to peer service packet, according to the transmission position information, comprise:
identifying (S121), by the NAS device, that the transmission position information is first position information, determining that the peer to peer service packet is from a terminal side, and forwarding the peer to peer service packet to the bidirectional processing apparatus;
receiving (S122), by the bidirectional processing apparatus, the peer to peer service packet forwarded by the NAS device, identifying that the transmission position information is second position information, determining that the peer to peer service packet enters the bidirectional processing apparatus for the first time, performing control processing or charging processing on the source end aiming at the peer to peer service packet, and then forwarding the peer to peer service packet to the NAS device;
receiving, (S123) by the NAS device, the peer to peer service packet forwarded by the bidirectional processing apparatus, identifying that the transmission position information is third position information, determining that the source end has been performed with control processing or charging processing, and forwarding the peer to peer service packet to the bidirectional processing apparatus again;
receiving (S124), by the bidirectional processing apparatus, the peer to peer service packet forwarded by the NAS device, identifying that the transmission position information is fourth position information, determining that the peer to peer service packet enters the bidirectional processing apparatus for the second time, performing control processing or charging processing on the opposite end aiming at the peer to peer service packet, and then forwarding the peer to peer service packet to the NAS device;
receiving (S125), by the NAS device, the peer to peer service packet forwarded by the bidirectional processing apparatus, identifying that the transmission position information is fifth position information, determining that the source end and the opposite end have been performed with control processing or charging processing, and sending the peer to peer service packet to the opposite end.

2. A method for peer to peer service processing, comprising:
receiving (S110), by a network side communication network, a service packet, and determining that the service packet is a peer to peer service packet according to a fact that addresses of a source end and an opposite end of the service packet are addresses in a terminal address pool; and
identifying (S120), by the network side communication network, transmission position information of the peer to peer service packet, and performing control processing or charging processing on one or both of the source end and the opposite end aiming at the peer to peer service packet, according to the transmission position information, wherein the transmission position information comprises information of a physical port, a virtual local area network or a tunnel which transmits the peer to peer service packet;
wherein the network side communication network comprises a network access server NAS device, a network device and a bidirectional processing apparatus;
the receiving (S110), by the network side communication network, the service packet, and the determining that the service packet is the peer to peer service packet according to the fact that the addresses of the source end and the opposite end of the service packet are the addresses in the terminal address pool, comprise:
receiving (S111), by the NAS device, the service packet, and determining that the service packet is the peer to peer service packet according to the fact that the addresses of the source end and the opposite end of the service packet are the addresses in the terminal address pool;
the identifying (S120), by the network side communication network, the transmission position information of the peer to peer service packet, and the performing control processing or charging processing on one or both of the source end and the opposite end aiming at the peer to peer service packet, according to the transmission position information, comprise:
identifying (S126), by the NAS device, that the transmission position information is first position information, determining that the peer to peer service packet is from a terminal side, and forwarding the peer to peer service packet to the network device;
receiving (S127), by the network device, the peer to peer service packet forwarded by the NAS device, identifying that the transmission position information is second position information, determining that the peer to peer service packet is from the NAS device, and forwarding the peer to peer service packet to the bidirectional processing apparatus;
receiving (S128), by the bidirectional processing apparatus, the peer to peer service packet forwarded by the network device, identifying that the transmission position information is third position information, determining that the peer to peer service packet enters the bidirectional processing apparatus for the first time, performing control processing or charging processing on the source end aiming at the peer to peer service packet, and then forwarding the peer to peer service packet to the network device;
receiving (S129), by the network device, the peer to peer service packet forwarded by the bidirectional processing apparatus, identifying that the transmission position information is fourth position information, determining that the source end has been performed with control processing or charging processing, and forwarding the peer to peer service packet to the bidirectional processing apparatus again;
receiving (S131), by the bidirectional processing apparatus, the peer to peer service packet forwarded by the network device, identifying that the transmission position information is fifth position information, determining that the peer to peer service packet enters the bidirectional processing apparatus for the second time, performing control processing or charging processing on the opposite end aiming at the peer to peer service packet, and then forwarding the peer to peer service packet to the network device;
receiving (S132), by the network device, the peer to peer service packet forwarded by the bidirectional processing apparatus, identifying that the transmission position information is sixth position information, determining that the source end and the opposite end have been performed with control processing or charging processing, and forwarding the peer to peer service packet to the NAS device;
receiving (S133), by the NAS device, the peer to peer service packet forwarded by the network device, identifying that the transmission position information is seventh position information, determining that the peer to peer service packet is from the network device, and sending the peer to peer service packet to the opposite end.

3. A network side communication network, comprising: a network access server NAS device (210) and a bidirectional processing apparatus (220), wherein the NAS device (210) is in communication connection with the bidirectional processing apparatus (220);
the NAS device (210) is configured to receive a service packet, determine that the service packet is a peer to peer service packet according to a fact that addresses of a source end and an opposite end of the service packet are addresses in a terminal address pool, identify transmission position information of the peer to peer service packet, and forward the peer to peer service packet according to the transmission position information, wherein the transmission position information comprises information of a physical port, a virtual local area network or a tunnel which transmits the peer to peer service packet; and
the bidirectional processing apparatus (220) is configured to identify the transmission position information, and perform control processing or charging processing on one or both of the source end and the opposite end aiming at the peer to peer service packet, according to the transmission position information;
wherein the NAS device (210) is specifically configured to identify that the transmission position information is first position information, determine that the peer to peer service packet is from a terminal side, and forward the peer to peer service packet to the bidirectional processing apparatus (220), or receive the peer to peer service packet forwarded by the bidirectional processing apparatus (220), identify that the transmission position information is third position information, determine that the source end has been performed with control processing or charging processing, and forward the peer to peer service packet to the bidirectional processing apparatus (220) again, or receive the peer to peer service packet forwarded by the bidirectional processing apparatus (220), identify that the transmission position information is fifth position information, determine that the source end and the opposite end have been performed with control processing or charging processing, and send the peer to peer service packet to the opposite end;
the bidirectional processing apparatus (220) comprises:
a receiving module (221), configured to receive the peer to peer service packet forwarded by the NAS device (210);
an identifying module (222), configured to identify that the transmission position information is second position information, determine that the peer to peer service packet enters the bidirectional processing apparatus for the first time, and trigger a first sub-processing module (223) of the bidirectional processing apparatus (220), or identify that the transmission position information is fourth position information, determine that the peer to peer service packet enters the bidirectional processing apparatus for the second time, and trigger a second sub-processing module (224) of the bidirectional processing apparatus (220);
the first sub-processing module (223), configured to perform control processing or charging processing on the source end aiming at the peer to peer service packet, and then forward the peer to peer service packet to the NAS device (210);
the second sub-processing module (224), configured to perform control processing or charging processing on the opposite end aiming at the peer to peer service packet, and then forward the peer to peer service packet to the NAS device (210).

4. A network side communication network, comprising: a network access server NAS device (310), a network device (320) and a bidirectional processing apparatus (330), wherein the bidirectional processing apparatus (330) is in communication connection with the NAS device (310) through the network device (320);
the NAS device (310) is configured to receive a service packet, determine that the service packet is a peer to peer service packet according to a fact that addresses of a source end and an opposite end of the service packet are addresses in a terminal address pool, identify transmission position information of the peer to peer service packet, and forward the peer to peer service packet according to the transmission position information, wherein the transmission position information comprises information of a physical port, a virtual local area network or a tunnel which transmits the peer to peer service packet;
the network device (320) is configured to identify the transmission position information and forward the peer to peer service packet according to the transmission position information; and
the bidirectional processing apparatus (330) is configured to identify the transmission position information, and perform control processing or charging processing on one or both of the source end and the opposite end aiming at the peer to peer service packet, according to the transmission position information;
wherein the NAS device (310) is specifically configured to identify that the transmission position information is first position information, determine that the peer to peer service packet is from a terminal side, and forward the peer to peer service packet to the network device (320), or receive the peer to peer service packet forwarded by the network device (320), identify that the transmission position information is seventh position information, determine that the peer to peer service packet is from the network device (320) and send the peer to peer service packet to the opposite end;
the network device (320) is specifically configured to receive the peer to peer service packet forwarded by the NAS device (310), identify that the transmission position information is second position information, determine that the peer to peer service packet is from the NAS device (310), and forward the peer to peer service packet to the bidirectional processing apparatus (330), or receive the peer to peer service packet forwarded by the bidirectional processing apparatus (330), identify that the transmission position information is fourth position information, determine that the source end has been performed with control processing or charging processing, and forward the peer to peer service packet to the bidirectional processing apparatus (330) again, or receive the peer to peer service packet forwarded by the bidirectional processing apparatus (330), identify that the transmission position information is sixth position information, determine that the source end and the opposite end have been performed with control processing or charging processing, and forward the peer to peer service packet to the NAS device (310);
the bidirectional processing apparatus (330) comprises:
a receiving module (331), configured to receive the peer to peer service packet forwarded by the network device (320);
an identifying module (332), configured to identify that the transmission position information is third position information, determine that the peer to peer service packet enters the bidirectional processing apparatus (330) for the first time, and trigger a first sub-processing module (333) of the bidirectional processing apparatus (330), or identify that the transmission position information is fifth position information, determine that the peer to peer service packet enters the bidirectional processing apparatus (330) for the second time, and trigger a second sub-processing module (334) of the bidirectional processing apparatus (330);
the first sub-processing module (333), configured to perform control processing or charging processing on the source end aiming at the peer to peer service packet, and then forward the peer to peer service packet to the network device (320);
the second sub-processing module (334), configured to perform control processing or charging processing on the opposite end aiming at the peer to peer service packet, and then forward the peer to peer service packet to the network device (320).

## Patentansprüche

1. Verfahren für eine "Peer-to-Peer"-Dienst-Verarbeitung, umfassend:
Empfangen (S110), durch ein netzwerkseitiges Kommunikationsnetzwerk, eines Dienstpakets, und Bestimmen, dass das Dienstpaket ein "Peer-to-Peer"-Dienstpaket ist, gemäß einer Tatsache, dass Adressen eines Quellenendes und eines entgegengesetzten Endes des Dienstpakets Adressen in einem Endgerät-Adressenpool sind; und
Identifizieren (S120), durch das netzwerkseitige Kommunikationsnetzwerk, einer Übertragungspositionsinformation des "Peer-to-Peer"-Dienstpakets, und Durchführen einer Steuerverarbeitung oder Gebührenberechnungsverarbeitung an einem oder beiden des Quellenendes und des entgegengesetzten Endes, auf das "Peer-to-Peer"-Dienstpaket ausgerichtet, gemäß der Übertragungspositionsinformation, wobei die Übertragungspositionsinformation eine Information eines physikalischen Ports, eines virtuellen lokalen Netzwerks (LAN, Local Area Network) oder eines Tunnels umfasst, der/das das "Peer-to-Peer"-Dienstpaket überträgt;
wobei das netzwerkseitige Kommunikationsnetzwerk eine "Network Access Server"-NAS-Vorrichtung und eine bidirektionale Verarbeitungseinrichtung umfasst;
wobei das Empfangen (S110), durch das netzwerkseitige Kommunikationsnetzwerk, des Dienstpakets, und das Bestimmen, dass das Dienstpaket ein "Peer-to-Peer"-Dienstpaket ist, gemäß der Tatsache, dass Adressen des Quellenendes und des entgegengesetzten Endes des Dienstpakets die Adressen in dem Endgerät-Adressenpool sind, umfasst:
Empfangen (S111), durch die NAS-Vorrichtung, des Dienstpakets, und Bestimmen, dass das Dienstpaket das "Peer-to-Peer"-Dienstpaket ist, gemäß der Tatsache, dass die Adressen des Quellenendes und des entgegengesetzten Endes des Dienstpakets die Adressen in dem Endgerät-Adressenpool sind;
wobei das Identifizieren (S120), durch das netzwerkseitige Kommunikationsnetzwerk, der Übertragungspositionsinformation des "Peer-to-Peer"-Dienstpakets, und das Durchführen der Steuerverarbeitung oder Gebührenberechnungsverarbeitung an einem oder beiden des Quellenendes und des entgegengesetzten Endes, auf das "Peer-to-Peer"-Dienstpaket ausgerichtet, gemäß der Übertragungspositionsinformation, umfasst:
Identifizieren (S121), durch die NAS-Vorrichtung, dass die Übertragungspositionsinformation eine erste Positionsinformation ist, Bestimmen, dass das "Peer-to-Peer"-Dienstpaket von einer Endgerätseite ist, und Weiterleiten des "Peer-to-Peer"-Dienstpakets an die bidirektionale Verarbeitungseinrichtung;
Empfangen (S122), durch die bidirektionale Verarbeitungseinrichtung, des durch die NAS-Vorrichtung weitergeleiteten "Peer-to-Peer"-Dienstpakets, Identifizieren, dass die Übertragungspositionsinformation eine zweite Positionsinformation ist, Bestimmen, dass das "Peer-to-Peer"-Dienstpaket zum ersten Mal in die bidirektionale Verarbeitungseinrichtung eingeht, Durchführen einer Steuerverarbeitung oder Gebührenberechnungsverarbeitung an dem Quellenende, auf das "Peer-to-Peer"-Dienstpaket ausgerichtet, und anschließend Weiterleiten des "Peer-to-Peer"-Dienstpakets an die NAS-Vorrichtung;
Empfangen (S123), durch die NAS-Vorrichtung, des durch die bidirektionale Verarbeitungseinrichtung weitergeleiteten "Peer-to-Peer"-Dienstpakets, Identifizieren, dass die Übertragungspositionsinformation eine dritte Positionsinformation ist, Bestimmen, dass an dem Quellenende eine Steuerverarbeitung oder Gebührenberechnungsverarbeitung durchgeführt wurde, und Weiterleiten des "Peer-to-Peer"-Dienstpakets wieder an die bidirektionale Verarbeitungseinrichtung;
Empfangen (S124), durch die bidirektionale Verarbeitungseinrichtung, des durch die NAS-Vorrichtung weitergeleiteten "Peer-to-Peer"-Dienstpakets, Identifizieren, dass die Übertragungspositionsinformation eine vierte Positionsinformation ist, Bestimmen, dass das "Peer-to-Peer"-Dienstpaket zum zweiten Mal in die bidirektionale Verarbeitungseinrichtung eingeht, Durchführen einer Steuerverarbeitung oder Gebührenberechnungsverarbeitung an dem entgegengesetzten Ende, auf das "Peer-to-Peer"-Dienstpaket ausgerichtet, und anschließend Weiterleiten des "Peer-to-Peer"-Dienstpakets an die NAS-Vorrichtung;
Empfangen (S125), durch die NAS-Vorrichtung, des durch die bidirektionale Verarbeitungseinrichtung weitergeleiteten "Peer-to-Peer"-Dienstpakets, Identifizieren, dass die Übertragungspositionsinformation eine fünfte Positionsinformation ist, Bestimmen, dass an dem Quellenende und dem entgegengesetzten Ende eine Steuerverarbeitung oder Gebührenberechnungsverarbeitung durchgeführt wurde, und Senden des "Peer-to-Peer"-Dienstpakets an das entgegengesetzte Ende.

2. Verfahren für eine "Peer-to-Peer"-Dienst-Verarbeitung, umfassend:
Empfangen (S110), durch ein netzwerkseitiges Kommunikationsnetzwerk, eines Dienstpakets, und Bestimmen, dass das Dienstpaket ein "Peer-to-Peer"-Dienstpaket ist, gemäß einer Tatsache, dass Adressen eines Quellenendes und eines entgegengesetzten Endes des Dienstpakets Adressen in einem Endgerät-Adressenpool sind; und
Identifizieren (S120), durch das netzwerkseitige Kommunikationsnetzwerk, einer Übertragungspositionsinformation des "Peer-to-Peer"-Dienstpakets, und Durchführen einer Steuerverarbeitung oder Gebührenberechnungsverarbeitung an einem oder beiden des Quellenendes und des entgegengesetzten Endes, auf das "Peer-to-Peer"-Dienstpaket ausgerichtet, gemäß der Übertragungspositionsinformation, wobei die Übertragungspositionsinformation eine Information eines physikalischen Ports, eines virtuellen lokalen Netzwerks (LAN, Local Area Network) oder eines Tunnels umfasst, der/das das "Peer-to-Peer"-Dienstpaket überträgt;
wobei das netzwerkseitige Kommunikationsnetzwerk eine "Network Access Server"-NAS-Vorrichtung, eine Netzwerkvorrichtung und eine bidirektionale Verarbeitungseinrichtung umfasst;
wobei das Empfangen (S110), durch das netzwerkseitige Kommunikationsnetzwerk, des Dienstpakets, und das Bestimmen, dass das Dienstpaket ein "Peer-to-Peer"-Dienstpaket ist, gemäß einer Tatsache, dass die Adressen des Quellenendes und des entgegengesetzten Endes des Dienstpakets Adressen in dem Endgerät-Adressenpool sind, umfasst:
Empfangen (S111), durch die NAS-Vorrichtung, des Dienstpakets, und Bestimmen, dass das Dienstpaket ein "Peer-to-Peer"-Dienstpaket ist, gemäß der Tatsache, dass die Adressen des Quellenendes und des entgegengesetzten Endes des Dienstpakets die Adressen in dem Endgerät-Adressenpool sind;
wobei das Identifizieren (S120), durch das netzwerkseitige Kommunikationsnetzwerk, der Übertragungspositionsinformation des "Peer-to-Peer"-Dienstpakets, und das Durchführen der Steuerverarbeitung oder Gebührenberechnungsverarbeitung an einem oder beiden des Quellenendes und des entgegengesetzten Endes, auf das "Peer-to-Peer"-Dienstpaket ausgerichtet, gemäß der Übertragungspositionsinformation, umfasst:
Identifizieren (S126), durch die NAS-Vorrichtung, dass die Übertragungspositionsinformation eine erste Positionsinformation ist, Bestimmen, dass das "Peer-to-Peer"-Dienstpaket von einer Endgerätseite ist, und Weiterleiten des "Peer-to-Peer"-Dienstpakets an die Netzwerkvorrichtung;
Empfangen (S127), durch die Netzwerkvorrichtung, des durch die NAS-Vorrichtung weitergeleiteten "Peer-to-Peer"-Dienstpakets, Identifizieren, dass die Übertragungspositionsinformation eine zweite Positionsinformation ist, Bestimmen, dass das "Peer-to-Peer"-Dienstpaket von der NAS-Vorrichtung ist, und Weiterleiten des "Peer-to-Peer"-Dienstpakets an die bidirektionale Verarbeitungseinrichtung;
Empfangen (S128), durch die bidirektionale Verarbeitungseinrichtung, des durch die Netzwerkvorrichtung weitergeleiteten "Peer-to-Peer"-Dienstpakets, Identifizieren, dass die Übertragungspositionsinformation eine dritte Positionsinformation ist, Bestimmen, dass das "Peer-to-Peer"-Dienstpaket zum ersten Mal in die bidirektionale Verarbeitungseinrichtung eingeht, Durchführen einer Steuerverarbeitung oder Gebührenberechnungsverarbeitung an dem Quellenende, auf das "Peer-to-Peer"-Dienstpaket ausgerichtet, und anschließend Weiterleiten des "Peer-to-Peer"-Dienstpakets an die Netzwerkvorrichtung;
Empfangen (S129), durch die Netzwerkvorrichtung, des durch die bidirektionale Verarbeitungseinrichtung weitergeleiteten "Peer-to-Peer"-Dienstpakets, Identifizieren, dass die Übertragungspositionsinformation eine vierte Positionsinformation ist, Bestimmen, dass an dem Quellenende eine Steuerverarbeitung oder Gebührenberechnungsverarbeitung durchgeführt wurde, und Weiterleiten des "Peer-to-Peer"-Dienstpakets wieder an die bidirektionale Verarbeitungseinrichtung;
Empfangen (S131), durch die bidirektionale Verarbeitungseinrichtung, des durch die Netzwerkvorrichtung weitergeleiteten "Peer-to-Peer"-Dienstpakets, Identifizieren, dass die Übertragungspositionsinformation eine fünfte Positionsinformation ist, Bestimmen, dass das "Peer-to-Peer"-Dienstpaket zum zweiten Mal in die bidirektionale Verarbeitungseinrichtung eingeht, Durchführen einer Steuerverarbeitung oder Gebührenberechnungsverarbeitung an dem entgegengesetzten Ende, auf das "Peer-to-Peer"-Dienstpaket ausgerichtet, und anschließend Weiterleiten des "Peer-to-Peer"-Dienstpakets an die Netzwerkvorrichtung;
Empfangen (S132), durch die Netzwerkvorrichtung, des durch die bidirektionale Verarbeitungseinrichtung weitergeleiteten "Peer-to-Peer"-Dienstpakets, Identifizieren, dass die Übertragungspositionsinformation eine sechste Positionsinformation ist, Bestimmen, dass an dem Quellenende und dem entgegengesetzten Ende eine Steuerverarbeitung oder Gebührenberechnungsverarbeitung durchgeführt wurde, und Weiterleiten des "Peer-to-Peer"-Dienstpakets an die NAS-Vorrichtung;
Empfangen (S133), durch die NAS-Vorrichtung, des durch die Netzwerkvorrichtung weitergeleiteten "Peer-to-Peer"-Dienstpakets, Identifizieren, dass die Übertragungspositionsinformation eine siebte Positionsinformation ist, Bestimmen, dass das "Peer-to-Peer"-Dienstpaket von der Netzwerkvorrichtung ist, und Senden des "Peer-to-Peer"-Dienstpakets an das entgegengesetzte Ende.

3. Netzwerkseitiges Kommunikationsnetzwerk, umfassend: eine "Network Access Server"-NAS-Vorrichtung (210) und eine bidirektionale Verarbeitungseinrichtung (220), wobei die NAS-Vorrichtung (210) in Kommunikationsverbindung mit der bidirektionalen Verarbeitungseinrichtung (220) ist;
wobei die NAS-Vorrichtung (210) ausgestaltet ist, ein Dienstpaket zu empfangen, zu bestimmen, dass das Dienstpaket ein "Peer-to-Peer"-Dienstpaket ist, gemäß einer Tatsache, dass Adressen eines Quellenendes und eines entgegengesetzten Endes des Dienstpakets Adressen in einem Endgerät-Adressenpool sind, eine Übertragungspositionsinformation des "Peer-to-Peer"-Dienstpakets zu identifizieren, und das "Peer-to-Peer"-Dienstpaket gemäß der Übertragungspositionsinformation weiterzuleiten, wobei die Übertragungspositionsinformation eine Information eines physikalischen Ports, eines virtuellen lokalen Netzwerks (LAN, Local Area Network) oder eines Tunnels umfasst, der/das das "Peer-to-Peer"-Dienstpaket überträgt; und
die bidirektionale Verarbeitungseinrichtung (220) ausgestaltet ist, die Übertragungspositionsinformation zu identifizieren, und eine Steuerverarbeitung oder Gebührenberechnungsverarbeitung an einem oder beiden des Quellenendes und des entgegengesetzten Endes, auf das "Peer-to-Peer"-Dienstpaket ausgerichtet, gemäß der Übertragungspositionsinformation durchzuführen;
wobei die NAS-Vorrichtung (210) insbesondere ausgestaltet ist, zu identifizieren, dass die Übertragungspositionsinformation eine erste Positionsinformation ist, zu bestimmen, dass das "Peer-to-Peer"-Dienstpaket von einer Endgerätseite ist, und das "Peer-to-Peer"-Dienstpaket an die bidirektionale Verarbeitungseinrichtung (220) weiterzuleiten, oder das durch die bidirektionale Verarbeitungseinrichtung (220) weitergeleitete "Peer-to-Peer"-Dienstpaket zu empfangen, zu identifizieren, dass die Übertragungspositionsinformation eine dritte Positionsinformation ist, zu bestimmen, dass an dem Quellenende eine Steuerverarbeitung oder Gebührenberechnungsverarbeitung durchgeführt wurde, und das "Peer-to-Peer"-Dienstpaket wieder an die bidirektionale Verarbeitungseinrichtung (220) weiterzuleiten, oder das durch die bidirektionale Verarbeitungseinrichtung (220) weitergeleitete "Peer-to-Peer"-Dienstpaket zu empfangen, zu identifizieren, dass die Übertragungspositionsinformation eine fünfte Positionsinformation ist, zu bestimmen, dass an dem Quellenende und dem entgegengesetzten Ende eine Steuerverarbeitung oder Gebührenberechnungsverarbeitung durchgeführt wurde, und das "Peer-to-Peer"-Dienstpaket an das entgegengesetzte Ende zu senden;
wobei die bidirektionale Verarbeitungseinrichtung (220) umfasst:
ein Empfangsmodul (221), das ausgestaltet ist, das durch die NAS-Vorrichtung (210) weitergeleitete "Peer-to-Peer"-Dienstpaket zu empfangen;
ein Identifizierungsmodul (222), das ausgestaltet ist, zu identifizieren, dass die Übertragungspositionsinformation eine zweite Positionsinformation ist, zu bestimmen, dass das "Peer-to-Peer"-Dienstpaket zum ersten Mal in die bidirektionale Verarbeitungseinrichtung eingeht, und ein erstes Unterverarbeitungsmodul (223) der bidirektionalen Verarbeitungseinrichtung (220) auszulösen, oder zu identifizieren, dass die Übertragungspositionsinformation eine vierte Positionsinformation ist, zu bestimmen, dass das "Peer-to-Peer"-Dienstpaket zum zweiten Mal in die bidirektionale Verarbeitungseinrichtung eingeht, ein zweites Unterverarbeitungsmodul (224) der bidirektionalen Verarbeitungseinrichtung (220) auszulösen;
wobei das erste Unterverarbeitungsmodul (223) ausgestaltet ist, eine Steuerverarbeitung oder Gebührenberechnungsverarbeitung an dem Quellenende, auf das "Peer-to-Peer"-Dienstpaket ausgerichtet, durchzuführen und anschließend das "Peer-to-Peer"-Dienstpaket an die NAS-Vorrichtung (210) weiterzuleiten;
wobei das zweite Unterverarbeitungsmodul (224) ausgestaltet ist, eine Steuerverarbeitung oder Gebührenberechnungsverarbeitung an dem entgegengesetzten Ende, auf das "Peer-to-Peer"-Dienstpaket ausgerichtet, durchzuführen und anschließend das "Peer-to-Peer"-Dienstpaket an die NAS-Vorrichtung (210) weiterzuleiten.

4. Netzwerkseitiges Kommunikationsnetzwerk, umfassend: eine "Network Access Server"-NAS-Vorrichtung (310), eine Netzwerkvorrichtung (320) und eine bidirektionale Verarbeitungseinrichtung (330), wobei die bidirektionale Verarbeitungseinrichtung (330) in Kommunikationsverbindung mit der NAS-Vorrichtung (310) durch die Netzwerkvorrichtung (320) ist;
wobei die NAS-Vorrichtung (310) ausgestaltet ist, ein Dienstpaket zu empfangen, zu bestimmen, dass das Dienstpaket ein "Peer-to-Peer"-Dienstpaket ist, gemäß einer Tatsache, dass Adressen eines Quellenendes und eines entgegengesetzten Endes des Dienstpakets Adressen in einem Endgerät-Adressenpool sind, eine Übertragungspositionsinformation des "Peer-to-Peer"-Dienstpakets zu identifizieren, und das "Peer-to-Peer"-Dienstpaket gemäß der Übertragungspositionsinformation weiterzuleiten, wobei die Übertragungspositionsinformation eine Information eines physikalischen Ports, eines virtuellen lokalen Netzwerks (LAN, Local Area Network) oder eines Tunnels umfasst, der/das das "Peer-to-Peer"-Dienstpaket überträgt;
wobei die Netzwerkvorrichtung (320) ausgestaltet ist, die Übertragungspositionsinformation zu identifizieren und das "Peer-to-Peer"-Dienstpaket gemäß der Übertragungspositionsinformation weiterzuleiten; und
die bidirektionale Verarbeitungseinrichtung (330) ausgestaltet ist, die Übertragungspositionsinformation zu identifizieren, und eine Steuerverarbeitung oder Gebührenberechnungsverarbeitung an einem oder beiden des Quellenendes und des entgegengesetzten Endes, auf das "Peer-to-Peer"-Dienstpaket ausgerichtet, gemäß der Übertragungspositionsinformation durchzuführen;
wobei die NAS-Vorrichtung (310) insbesondere ausgestaltet ist, zu identifizieren, dass die Übertragungspositionsinformation eine erste Positionsinformation ist, zu bestimmen, dass das "Peer-to-Peer"-Dienstpaket von einer Endgerätseite ist, und das "Peer-to-Peer"-Dienstpaket an die Netzwerkvorrichtung (320) weiterzuleiten, oder das durch die Netzwerkvorrichtung (320) weitergeleitete "Peer-to-Peer"-Dienstpaket zu empfangen, zu identifizieren, dass die Übertragungspositionsinformation eine siebte Positionsinformation ist, zu bestimmen, dass das "Peer-to-Peer"-Dienstpaket von der Netzwerkvorrichtung (320) ist und das "Peer-to-Peer"-Dienstpaket an das entgegengesetzte Ende zu senden;
wobei die Netzwerkvorrichtung (320) insbesondere ausgestaltet ist, das durch die NAS-Vorrichtung (310) weitergeleitete "Peer-to-Peer"-Dienstpaket zu empfangen, zu identifizieren, dass die Übertragungspositionsinformation eine zweite Positionsinformation ist, zu bestimmen, dass das "Peer-to-Peer"-Dienstpaket von der NAS-Vorrichtung (310) ist, und das "Peer-to-Peer"-Dienstpaket an die bidirektionale Verarbeitungseinrichtung (330) weiterzuleiten, oder das durch die bidirektionale Verarbeitungseinrichtung (330) weitergeleitete "Peer-to-Peer"-Dienstpaket zu empfangen, zu identifizieren, dass die Übertragungspositionsinformation eine vierte Positionsinformation ist, zu bestimmen, dass an dem Quellenende eine Steuerverarbeitung oder Gebührenberechnungsverarbeitung durchgeführt wurde, und das "Peer-to-Peer"-Dienstpaket wieder an die bidirektionale Verarbeitungseinrichtung (330) weiterzuleiten, oder das durch die bidirektionale Verarbeitungseinrichtung (330) weitergeleitete "Peer-to-Peer"-Dienstpaket zu empfangen, zu identifizieren, dass die Übertragungspositionsinformation eine sechste Positionsinformation ist, zu bestimmen, dass an dem Quellenende und dem entgegengesetzten Ende eine Steuerverarbeitung oder Gebührenberechnungsverarbeitung durchgeführt wurde, und das "Peer-to-Peer"-Dienstpaket an die NAS-Vorrichtung (310) weiterzuleiten;
wobei die bidirektionale Verarbeitungseinrichtung (330) umfasst:
ein Empfangsmodul (331), das ausgestaltet ist, das durch die Netzwerkvorrichtung (320) weitergeleitete "Peer-to-Peer"-Dienstpaket zu empfangen;
ein Identifizierungsmodul (332), das ausgestaltet ist, zu identifizieren, dass die Übertragungspositionsinformation eine dritte Positionsinformation ist, zu bestimmen, dass das "Peer-to-Peer"-Dienstpaket zum ersten Mal in die bidirektionale Verarbeitungseinrichtung (330) eingeht, und ein erstes Unterverarbeitungsmodul (333) der bidirektionalen Verarbeitungseinrichtung (330) auszulösen, oder zu identifizieren, dass die Übertragungspositionsinformation eine fünfte Positionsinformation ist, zu bestimmen, dass das "Peer-to-Peer"-Dienstpaket zum zweiten Mal in die bidirektionale Verarbeitungseinrichtung (330) eingeht, und ein zweites Unterverarbeitungsmodul (334) der bidirektionalen Verarbeitungseinrichtung (330) auszulösen;
wobei das erste Unterverarbeitungsmodul (333) ausgestaltet ist, eine Steuerverarbeitung oder Gebührenberechnungsverarbeitung an dem Quellenende, auf das "Peer-to-Peer"-Dienstpaket ausgerichtet, durchzuführen und anschließend das "Peer-to-Peer"-Dienstpaket an die Netzwerkvorrichtung (320) weiterzuleiten;
wobei das zweite Unterverarbeitungsmodul (334) ausgestaltet ist, eine Steuerverarbeitung oder Gebührenberechnungsverarbeitung an dem entgegengesetzten Ende, auf das "Peer-to-Peer"-Dienstpaket ausgerichtet, durchzuführen und anschließend das "Peer-to-Peer"-Dienstpaket an die Netzwerkvorrichtung (320) weiterzuleiten.

## Revendications

1. Procédé de traitement d'un service de pair à pair, comprenant :
la réception (S110), par un réseau de communication côté réseau, d'un paquet de service, et la détermination du fait que le paquet de service est un paquet de service de pair à pair en fonction d'un fait selon lequel les adresses d'une extrémité source et d'une extrémité opposée du paquet de service sont des adresses d'un groupe d'adresses de terminal ; et
l'identification (S120), par le réseau de communication côté réseau, d'informations de position de transmission du paquet de service de pair à pair, et l'exécution, sur l'une ou les deux de l'extrémité source et de l'extrémité opposée, d'un traitement de commande ou d'un traitement de facturation visant le paquet de service de pair à pair, en fonction des informations de position de transmission, lesquelles informations de position de transmission comprenant des informations sur un port physique, un réseau local virtuel ou un tunnel qui transmet le paquet de service de pair à pair ;
le réseau de communication côté réseau comprenant un dispositif serveur d'accès au réseau NAS et un appareil de traitement bidirectionnel ;
la réception (S110), par le réseau de communication côté réseau, du paquet de service, et la détermination du fait que le paquet de service est le paquet de service de pair à pair en fonction du fait que les adresses de l'extrémité source et de l'extrémité opposée du paquet de service sont les adresses du groupe d'adresses de terminal, comprenant :
la réception (S111), par le dispositif NAS, du paquet de service, et la détermination du fait que le paquet de service est le paquet de service de pair à pair en fonction du fait que les adresses de l'extrémité source et de l'extrémité opposée du paquet de service sont les adresses du groupe d'adresses de terminal ;
l'identification (S120), par le réseau de communication côté réseau, des informations de position de transmission du paquet de service de pair à pair, et l'exécution, sur l'une ou les deux de l'extrémité source et de l'extrémité opposée, d'un traitement de commande ou d'un traitement de facturation visant le paquet de service de pair à pair, en fonction des informations de position de transmission, comprenant :
l'identification (S121), par le dispositif NAS, du fait que les informations de position de transmission sont des premières informations de position, la détermination du fait que le paquet de service de pair à pair provient d'un côté terminal, et le transfert du paquet de service de pair à pair à l'appareil de traitement bidirectionnel ;
la réception (S122), par l'appareil de traitement bidirectionnel, du paquet de service de pair à pair transféré par le dispositif NAS, l'identification du fait que les informations de position de transmission sont des deuxièmes informations de position, la détermination du fait que le paquet de service de pair à pair entre dans l'appareil de traitement bidirectionnel pour la première fois, l'exécution, sur l'extrémité source, d'un traitement de commande ou d'un traitement de facturation visant le paquet de service de pair à pair, puis le transfert du paquet de service de pair à pair au dispositif NAS ;
la réception (S123), par le dispositif NAS, du paquet de service de pair à pair transféré par l'appareil de traitement bidirectionnel, l'identification du fait que les informations de position de transmission sont des troisièmes informations de position, la détermination du fait que l'extrémité source a été soumise à un traitement de commande ou un traitement de facturation, et le transfert de nouveau du paquet de service de pair à pair à l'appareil de traitement bidirectionnel ;
la réception (S124), par l'appareil de traitement bidirectionnel, du paquet de service de pair à pair transféré par le dispositif NAS, l'identification du fait que les informations de position de transmission sont des quatrièmes informations de position, la détermination du fait que le paquet de service de pair à pair entre dans l'appareil de traitement bidirectionnel pour la deuxième fois, l'exécution, sur l'extrémité opposée, d'un traitement de commande ou d'un traitement de facturation visant le paquet de service de pair à pair, puis le transfert du paquet de service de pair à pair au dispositif NAS ;
la réception (S125), par le dispositif NAS, du paquet de service de pair à pair transféré par l'appareil de traitement bidirectionnel, l'identification du fait que les informations de position de transmission sont des cinquièmes informations de position, la détermination du fait que l'extrémité source et l'extrémité opposée ont été soumises à un traitement de commande ou un traitement de facturation, et l'envoi du paquet de service de pair à pair à l'extrémité opposée.

2. Procédé de traitement d'un service pair à pair, comprenant :
la réception (S110), par le réseau de communication côté réseau, d'un paquet de service, et la détermination du fait que le paquet de service est un paquet de service de pair à pair en fonction d'un fait selon lequel les adresses d'une extrémité source et d'une extrémité opposée du paquet de service sont des adresses d'un groupe d'adresses de terminal ; et
l'identification (S 120), par le réseau de communication côté réseau, d'informations de position de transmission du paquet de service de pair à pair, et l'exécution, sur l'une ou les deux de l'extrémité source et de l'extrémité opposée, d'un traitement de commande ou d'un traitement de facturation visant le paquet de service de pair à pair, en fonction des informations de position de transmission, lesquelles informations de position de transmission comprenant des informations sur un port physique, un réseau local virtuel ou un tunnel qui transmet le paquet de service de pair à pair ;
le réseau de communication côté réseau comprenant un dispositif serveur d'accès au réseau NAS et un appareil de traitement bidirectionnel ;
la réception (S110), par le réseau de communication côté réseau, du paquet de service, et la détermination du fait que le paquet de service est le paquet de service de pair à pair en fonction du fait que les adresses de l'extrémité source et de l'extrémité opposée du paquet de service sont les adresses du groupe d'adresses de terminal, comprenant :
la réception (S111), par le dispositif NAS, du paquet de service, et la détermination du fait que le paquet de service est le paquet de service de pair à pair en fonction du fait que les adresses de l'extrémité source et de l'extrémité opposée du paquet de service sont les adresses du groupe d'adresses de terminal ;
l'identification (S120), par le réseau de communication côté réseau, des informations de position de transmission du paquet de service de pair à pair, et l'exécution, sur l'une ou les deux de l'extrémité source et de l'extrémité opposée, d'un traitement de commande ou d'un traitement de facturation visant le paquet de service de pair à pair, en fonction des informations de position de transmission, comprenant :
l'identification (S126), par le dispositif NAS, du fait que les informations de position de transmission sont des premières informations de position, la détermination du fait que le paquet de service de pair à pair provient d'un côté terminal, et le transfert du paquet de service de pair à pair à l'appareil de traitement bidirectionnel ;
la réception (S127), par le dispositif de réseau, du paquet de service de pair à pair transféré par le dispositif NAS, l'identification du fait que les informations de position de transmission sont des deuxièmes informations de position, la détermination du fait que le paquet de service de pair à pair provient du dispositif NAS, et le transfert du paquet de service de pair à pair à l'appareil de traitement bidirectionnel ;
la réception (S128), par l'appareil de traitement bidirectionnel, du paquet de service de pair à pair transféré par le dispositif réseau, l'identification du fait que les informations de position de transmission sont des troisièmes informations de position, la détermination du fait que le paquet de service de pair à pair entre dans l'appareil de traitement bidirectionnel pour la première fois, l'exécution, sur l'extrémité source, d'un traitement de commande ou d'un traitement de facturation visant le paquet de service de pair à pair, puis le transfert du paquet de service de pair à pair au dispositif réseau ;
la réception (S129), par le dispositif réseau, du paquet de service de pair à pair transféré par l'appareil de traitement bidirectionnel, l'identification du fait que les informations de position de transmission sont des quatrièmes informations de position, la détermination du fait que l'extrémité source a été soumise à un traitement de commande ou un traitement de facturation, et le transfert de nouveau du paquet de service de pair à pair à l'appareil de traitement bidirectionnel ;
la réception (S131), par l'appareil de traitement bidirectionnel, du paquet de service de pair à pair transféré par le dispositif réseau, l'identification du fait que les informations de position de transmission sont des cinquièmes informations de position, la détermination du fait que le paquet de service de pair à pair entre dans l'appareil de traitement bidirectionnel pour la deuxième fois, l'exécution, sur l'extrémité opposée, d'un traitement de commande ou d'un traitement de facturation visant le paquet de service de pair à pair, puis le transfert du paquet de service de pair à pair au dispositif réseau ;
la réception (S132), par le dispositif réseau, du paquet de service de pair à pair transféré par l'appareil de traitement bidirectionnel, l'identification du fait que les informations de position de transmission sont des sixièmes informations de position, la détermination du fait que l'extrémité source et l'extrémité opposée ont été soumises à un traitement de commande ou un traitement de facturation, et le transfert du paquet de service de pair à pair au dispositif NAS ;
la réception (S133), par le dispositif NAS, du paquet de service de pair à pair transféré par le dispositif réseau, l'identification du fait que les informations de position de transmission sont des septièmes informations de position, la détermination du fait que le paquet de service de pair à pair provient du dispositif réseau, et l'envoi du paquet de service de pair à pair à l'extrémité opposée.

3. Réseau de communication côté réseau, comprenant : un dispositif serveur d'accès réseau NAS (210) et un appareil de traitement bidirectionnel (220), le dispositif NAS (210) étant en liaison de communication avec l'appareil de traitement bidirectionnel (220) ;
le dispositif NAS (210) étant configuré pour recevoir un paquet de service, déterminer que le paquet de service est un paquet de service de pair à pair en fonction d'un fait selon lequel les adresses d'une extrémité source et d'une extrémité opposée du paquet de service sont des adresses d'un groupe d'adresses de terminal, identifier des informations de position de transmission du paquet de service de pair à pair, et transférer le paquet de service de pair à pair en fonction des informations de position de transmission, lesquelles informations de position de transmission comprenant des informations sur un port physique, un réseau local virtuel ou un tunnel qui transmet le paquet de service de pair à pair ; et
l'appareil de traitement bidirectionnel (220) étant configuré pour identifier les informations de position de transmission, et exécuter, sur l'une ou les deux de l'extrémité source et de l'extrémité opposée, un traitement de commande ou un traitement de facturation visant le paquet de service de pair à pair, en fonction des informations de position de transmission ;
le dispositif NAS (210) étant spécifiquement configuré pour identifier que les informations de position de transmission sont des premières informations de position, déterminer que le paquet de service de pair à pair provient d'un côté terminal, et transférer le paquet de service de pair à pair à l'appareil de traitement bidirectionnel (220), ou recevoir le paquet de service de pair à pair transféré par l'appareil de traitement bidirectionnel (220), identifier que les informations de position de transmission sont des troisièmes informations de position, déterminer que l'extrémité source a été soumise à un traitement de commande ou un traitement de facturation, et transférer de nouveau le paquet de service de pair à pair à l'appareil de traitement bidirectionnel (220), ou recevoir le paquet de service de pair à pair transféré par l'appareil de traitement bidirectionnel (220), identifier que les informations de position de transmission sont des cinquièmes informations de position, déterminer que l'extrémité source et l'extrémité opposée ont été soumises à un traitement de commande ou un traitement de facturation, et envoyer le paquet de service de pair à pair à l'extrémité opposée ;
l'appareil de traitement bidirectionnel (220) comprenant :
un module de réception (221), configuré pour recevoir le paquet de service de pair à pair transféré par le dispositif NAS (210) ;
un module d'identification (222), configuré pour identifier que les informations de position de transmission sont des deuxièmes informations de position, déterminer que le paquet de service de pair à pair entre dans l'appareil de traitement bidirectionnel pour la première fois, et déclencher un premier sous-module de traitement (223) de l'appareil de traitement bidirectionnel (220), ou identifier que les informations de position de transmission sont des quatrièmes informations de position, déterminer que le paquet de service de pair à pair entre dans l'appareil de traitement bidirectionnel pour la deuxième fois, et déclencher un deuxième sous-module de traitement (224) de l'appareil de traitement bidirectionnel (220) ;
le premier sous-module de traitement (223), étant configuré pour effectuer, sur l'extrémité source, un traitement de commande ou un traitement de facturation visant le paquet de service de pair à pair, puis transférer le paquet de service de pair à pair au dispositif NAS (210) ;
le deuxième sous-module de traitement (224), étant configuré pour effectuer, sur l'extrémité opposée, un traitement de commande ou un traitement de facturation visant le paquet de service de pair à pair, puis transférer le paquet de service de pair à pair au dispositif NAS (210).

4. Réseau de communication côté réseau, comprenant : un dispositif serveur d'accès réseau NAS (310), un dispositif réseau (320) et un appareil de traitement bidirectionnel (330), l'appareil de traitement bidirectionnel (330) étant en liaison de communication avec le dispositif NAS (310) par l'intermédiaire du dispositif réseau (320) ;
le dispositif NAS (310) étant configuré pour recevoir un paquet de service, déterminer que le paquet de service est un paquet de service de pair à pair en fonction d'un fait selon lequel les adresses d'une extrémité source et d'une extrémité opposée du paquet de service sont des adresses d'un groupe d'adresses de terminal, identifier des informations de position de transmission du paquet de service de pair à pair, et transférer le paquet de service de pair à pair en fonction des informations de position de transmission, lesquelles informations de position de transmission comprenant des informations sur un port physique, un réseau local virtuel ou un tunnel qui transmet le paquet de service de pair à pair ;
le dispositif réseau (320) étant configuré pour identifier les informations de position de transmission et transférer le paquet de service de pair à pair en fonction des informations de position de transmission ; et
l'appareil de traitement bidirectionnel (330) étant configuré pour identifier les informations de position de transmission, et effectuer, sur l'une ou les deux de l'extrémité source et de l'extrémité opposée, un traitement de commande ou un traitement de facturation visant le paquet de service de pair à pair, en fonction des informations de position de transmission ;
le dispositif NAS (310) étant spécifiquement configuré pour identifier que les informations de position de transmission sont des premières informations de position, déterminer que le paquet de service de pair à pair provient d'un côté terminal, et transférer le paquet de service de pair à pair au dispositif réseau (320), ou recevoir le paquet de service de pair à pair transféré par le dispositif réseau (320), identifier que les informations de position de transmission sont des septièmes informations de position, déterminer que le paquet de service de pair à pair provient du dispositif réseau (320) et envoyer le paquet de service de pair à pair à l'extrémité opposée ;
le dispositif réseau (320) étant spécifiquement configuré pour recevoir le paquet de service de pair à pair transféré par le dispositif NAS (310), identifier que les informations de position de transmission sont des deuxièmes informations de position, déterminer que le paquet de service de pair à pair provient du dispositif NAS (310), et transférer le paquet de service de pair à pair à l'appareil de traitement bidirectionnel (330), ou recevoir le paquet de service de pair à pair transféré par l'appareil de traitement bidirectionnel (330), identifier que les informations de position de transmission sont des quatrièmes informations de position, déterminer que l'extrémité source a été soumise à un traitement de commande ou un traitement de facturation, et transférer de nouveau du paquet de service de pair à pair à l'appareil de traitement bidirectionnel (330), ou recevoir le paquet de service de pair à pair transféré par l'appareil de traitement bidirectionnel (330), identifier que les informations de position de transmission sont des sixième informations de position, déterminer que l'extrémité source et l'extrémité opposée ont été soumises à un traitement de commande ou un traitement de facturation, et transférer le paquet de service de pair à pair au dispositif NAS (310) ;
l'appareil de traitement bidirectionnel (330) comprenant :
un module de réception (331), configuré pour recevoir le paquet de service de pair à pair transféré par le dispositif réseau (320) ;
un module d'identification (332), configuré pour identifier que les informations de position de transmission sont des troisièmes informations de position, déterminer que le paquet de service de pair à pair entre dans l'appareil de traitement bidirectionnel (330) pour la première fois, et déclencher un premier sous-module de traitement (333) de l'appareil de traitement bidirectionnel (330), ou identifier que les informations de position de transmission sont des cinquièmes informations de position, déterminer que le paquet de service de pair à pair entre dans l'appareil de traitement bidirectionnel (330) pour la deuxième fois, et déclencher un deuxième sous-module de traitement (334) de l'appareil de traitement bidirectionnel (330) ;
le premier sous-module de traitement (333), étant configuré pour effectuer, sur l'extrémité source, un traitement de commande ou un traitement de facturation visant le paquet de service de pair à pair, puis transférer le paquet de service de pair à pair au dispositif réseau (320) ;
le deuxième sous-module de traitement (334), étant configuré pour effectuer, sur l'extrémité opposée, un traitement de commande ou un traitement de facturation visant le paquet de service de pair à pair, puis transférer le paquet de service de pair à pair au dispositif réseau (320).
